# EUROPEAN PATENT APPLICATION

(11) **EP 4 350 508 A1**
(43) Date of publication of application: **10.04.2024**
(21) Application number: 22810156.4
(22) Date of filing: 23.03.2022
(51) Int. Cl.: G06F 8/76

(54) **RESOURCE QUEUE MANAGEMENT INTERFACE VERIFICATION METHOD, ELECTRONIC DEVICE, AND STORAGE MEDIUM**

(30) Priority: 27.05.2021 CN 202110588355
(71) Applicant: Sanechips Technology Co., Ltd., Shenzhen, Guangdong 518055 (CN)
(72) Inventor: WANG, Liping, Shenzhen, Guangdong 518055 (CN); SHENG, Haibo, Shenzhen, Guangdong 518055 (CN)
(74) Representative: Ipsilon
(86) International application number: PCT/CN2022/082550
(87) International publication number: WO 2022/247422

(57) **Abstract**

The present application provides a resource queue management interface verification method, an electronic device, and a storage medium. The resource queue management interface verification method includes: generating a verification instance; under a condition that a first resource queue management interface of the verification instance is connected to a second resource queue management interface of a master module to be verified, verifying the second resource queue management interface of the master module to be verified through the verification instance; under a condition that the first resource queue management interface of the verification instance is connected to a third resource queue management interface of a slave module to be verified, verifying the third resource queue management interface of the slave module to be verified through the verification instance; and under a condition that the first resource queue management interface of the verification instance is connected to both the second resource queue management interface and the third resource queue management interface, verifying an interaction process between the second resource queue management interface and the third resource queue management interface through the verification instance.

## Description

### TECHNICAL FIELD

Embodiments of the present disclosure relate to the technical field of chips.

### BACKGROUND

A resource queue management interface refers to an interface used for transmitting a resource queue management signal and resource queue management data between a master module and a slave module in a chip. A current resource queue management interface verification method mainly adopts a resource queue management interface agent module corresponding to the master module to verify the master module, and adopts a resource queue management interface agent module corresponding to the slave module to verify the slave module.

### SUMMARY

Embodiments of the present application provide a resource queue management interface verification method, an electronic device, and a storage medium.

In a first aspect, the present disclosure provides a resource queue management interface verification method, including: generating a verification instance; under a condition that a first resource queue management interface of the verification instance is connected to a second resource queue management interface of a master module to be verified, verifying the second resource queue management interface of the master module to be verified through the verification instance; under a condition that the first resource queue management interface of the verification instance is connected to a third resource queue management interface of a slave module to be verified, verifying the third resource queue management interface of the slave module to be verified through the verification instance; and under a condition that the first resource queue management interface of the verification instance is connected to both the second resource queue management interface and the third resource queue management interface, verifying an interaction process between the second resource queue management interface and the third resource queue management interface through the verification instance.

In a second aspect, the present disclosure provides an electronic device, including: at least one processor; and a memory having at least one program stored thereon which, when executed by the at least one processor, causes any resource queue management interface verification method described above to be implemented.

In a third aspect, the present disclosure provides a storage medium having a computer program stored thereon which, when executed by a processor, causes any resource queue management interface verification method described above to be implemented.

### BRIEF DESCRIPTION OF DRAWINGS

FIG. 1 is a schematic diagram showing interaction between a master module and a slave module in an existing art;
FIG. 2 is a schematic diagram showing a resource queue management interface agent module corresponding to a master module being adopted to verify the master module in an e existing art;
FIG. 3 is a schematic diagram showing a resource queue management interface agent module corresponding to a slave module being adopted to verified the slave module in an existing art;
FIG. 4 is a flowchart of a resource queue management interface verification method according to an embodiment of the present disclosure;
FIG. 5 is a schematic diagram showing state changes of resources in a resource pool in a scenario where a second resource queue management interface corresponding to a master module to be verified is being verified according to an embodiment of the present disclosure;
FIG. 6 is a schematic diagram showing state changes of resources in a resource pool in a scenario where a third resource queue management interface corresponding to a slave module to be verified is being verified according to an embodiment of the present disclosure;
FIG. 7 is a schematic diagram of a packaged data structure according to an embodiment of the present disclosure;
FIG. 8 is a block diagram of a resource queue management interface verification apparatus according to an embodiment of the present disclosure; and
FIG. 9 is a composition block diagram of a verification instance according to an embodiment of the present disclosure.

### DETAIL DESCRIPTION OF EMBODIMENTS

In order to make those skilled in the art better understand the technical solution of the present application, a resource queue management interface verification method, an electronic device, and a storage medium of present application will be described in detail below with reference to the accompanying drawings.

Example embodiments will be described more sufficiently below with reference to the accompanying drawings, but which may be embodied in different forms and should not be construed as limited to the embodiments set forth herein. Rather, these embodiments are provided so that the present application will be thorough and complete, and will fully convey the scope of the present application to those skilled in the art.

The embodiments of the present application and features thereof may be combined with each other as long as they are not contradictory.

As used herein, the term "and/or" includes any and all combinations of at least one associated listed item.

Terms are used herein only for a purpose of describing specific embodiments and are not intended to limit the present application. As used herein, the singular forms "a", "an" and "the" are intended to include the plural forms as well, unless the context clearly indicates otherwise. It will be further understood that as used herein, terms "comprise", "include" and/or "consist of ..." specify the presence of the stated features, integers, steps, operations, elements, and/or components, but do not preclude the presence or addition of at least one other feature, integer, step, operation, element, component, and/or group thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having meanings that are consistent with their meanings in the context of an existing art and the present application, and will not be interpreted in an idealized or overly formal sense unless expressly so defined herein.

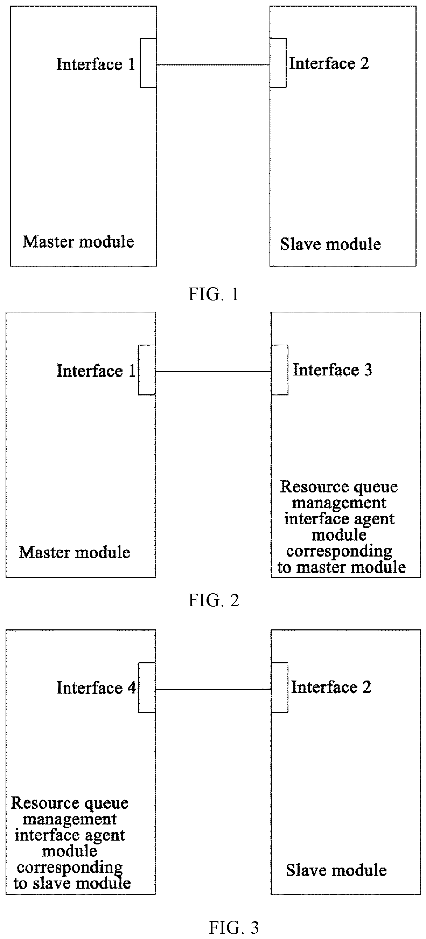

FIG. 1 is a schematic diagram showing interaction between a master module and a slave module in an existing art. As shown in FIG. 1, the master module includes an interface 1, the slave module includes an interface 2, and the master module and the slave module transmit a resource queue management signal and resource queue management data through the interface 1 and the interface 2. The master module is a resource queue management module, and the slave module is a processing module for requesting resources and receiving queue tasks. Specifically, the interfaces 1 and 2, as resource queue management interfaces, may be implemented by a corresponding quantity of pins. Resource queue management specifically includes: four types of operations, namely resource application, resource release, resource enqueuing and resource dequeuing.

A current resource queue management interface verification method mainly adopts a resource queue management interface agent module corresponding to the master module to verify the master module, and adopts a resource queue management interface agent module corresponding to the slave module to verify the slave module. In this method, implementation codes of the resource queue management interface agent module corresponding to the master module and the resource queue management interface agent module corresponding to the slave module are partially repeated, so that code maintenance efficiency is relatively low, and an interaction process between the resource queue management interfaces of the master module and the slave module is difficult to be verified.

FIG. 2 is a schematic diagram showing a resource queue management interface agent module corresponding to a master module being adopted to verify the master module in an existing art. As shown in FIG. 2, the resource queue management interface agent module corresponding to the master module performs transmission of the resource queue management signal and the resource queue management data with the interface 1 of the master module through an interface 3.

A process of verifying the master module by the resource queue management interface agent module corresponding to the master module may include: sending, via the interface 3, a request valid signal, a request type representing resource application, a resource type to be applied and a quantity of resources to be applied to the interface 1 of a master module to be verified; receiving, via the interface 3, a response valid signal and response data sent from the master module to be verified through the interface 1; acquiring the request valid signal, the request type representing the resource application, the resource type to be applied and the quantity of the resources to be applied sent via the interface 3, acquiring the response valid signal and the response data received at the interface 3, and verifying the master module to be verified based on the acquired data; sending, via the interface 3, the request valid signal, a request type representing resource release, a quantity of resources to be released, and a resource identifier (ID) sequence to be released to the interface 1 of the master module to be verified; receiving, via the interface 3, the response valid signal sent from the master module to be verified through the interface 1; acquiring the request valid signal, the request type representing the resource release, the quantity of the resources to be released, and the resource ID sequence to be released sent via the interface 3, and acquiring the response valid signal received at the interface 3; sending, via the interface 3, the request valid signal, a request type representing resource enqueuing, a resource ID to be enqueued, and an enqueuing characteristic parameter to the interface 1 of the master module to be verified; receiving, via the interface 3, the response valid signal sent from the master module to be verified through the interface 1; acquiring the request valid signal, the request type representing the resource enqueuing, the resource ID to be enqueued, and the enqueuing characteristic parameter sent via the interface 3, and acquiring the response valid signal received at the interface 3; sending, via the interface 3, the request valid signal, a request type representing resource dequeuing, and a resource dequeuing queue number to the interface 1 of the master module to be verified; receiving, via the interface 3, the response valid signal and response data sent from the master module to be verified through the interface 1; acquiring the request valid signal, the request type representing the resource dequeuing, and the resource dequeuing queue number sent via the interface 3, and acquiring the response valid signal and the response data received at the interface 3; and sending the acquired data of the four operations to another verification module for another verification.

FIG. 3 is a schematic diagram showing a resource queue management interface agent module corresponding to a slave module being adopted to verify the slave module in an existing art. As shown in FIG. 3, the resource queue management interface agent module corresponding to the slave module performs transmission of the resource queue management signal and the resource queue management data with the interface 2 of the slave module through an interface 4.

A process of verifying the slave module by the resource queue management interface agent module corresponding to the slave module mainly includes: detecting, via the interface 4, the request valid signal and request type information sent from the slave module to be verified through the interface 2; parsing the request type information; if the request type information indicates request types of the resource application and the resource dequeuing, sending, via the interface 4, the response valid signal, response data and a resource ID to the interface 2 of the slave module to be verified; acquiring the request valid signal and the request type information received at the interface 4, acquiring the response valid signal, the response data, and the resource ID sent via the interface 4, and verifying the slave module to be verified based on the acquired data; if the request type information indicates request types of the resource release and the resource enqueuing, sending, via the interface 4, the response valid signal to the interface 2 of the slave module to be verified; acquiring the request valid signal and the request type information received at the interface 4, acquiring the response valid signal sent via the interface 4; and sending the acquired data of the four operations to another verification module for another verification.

As can be seen, in above verification processes, the resource queue management interface agent module corresponding to the master module is desired to acquire data sent and received via the interface 3, while the resource queue management interface agent module corresponding to the slave module is desired to acquire data sent and received via the interface 4. Since the resource queue management interface agent module corresponding to the master module and the resource queue management interface agent module corresponding to the slave module are two independent modules, and the interface 3 and the interface 4 are also different interfaces, corresponding codes are desired to be used in acquiring the data sent and received via the interface 3 and acquiring the data sent and received via the interface 4, respectively. In other words, implementation codes for acquiring the data sent and received via the interface 3 and implementation codes for acquiring the data sent and received via the interface 4 are actually the same, that is, are repeated.

In addition, when the master module to be verified includes multiple sets of interfaces 1, corresponding codes are desired to be written for each set of interfaces 1 to verify each set of interfaces 1, and codes for different sets of interfaces 1 are maintained separately. Similarly, when the slave module to be verified includes multiple sets of interfaces 2, corresponding codes are desired to be written for each set of interfaces 2 to verify each set of interfaces 2, and codes for different sets of interfaces 2 are maintained separately. In this case, sharing of improvements for the codes cannot be achieved in the verification processes, leading to frequently repeated errors and reduced code maintenance efficiency.

In addition, the resource queue management interface agent module corresponding to the master module can verify only the resource queue management interface of the master module to be verified, and the resource queue management interface agent module corresponding to the slave module can verify only the resource queue management interface of the slave module to be verified, while the interaction process between the resource queue management interfaces of the master module and the slave module cannot be verified.

According to an embodiment of the present disclosure, verification on a resource queue management interface refers to verification on transmission of a resource queue management signal and resource queue management data over the resource queue management interface, and verification on a time sequence for data transmission, which may ensure correct transmission of the transmission of the resource queue management signal and the resource queue management data over the resource queue management interface, as well as a correct time sequence for the data transmission.

According to an embodiment of the present disclosure, a master module is responsible for resource queue management, and a slave module is responsible for processes of requesting resources and receiving queue tasks.

According to an embodiment of the present disclosure, the resources are data storage space used during a service process performed by the master module and the slave module, various types and quantities of the resources may be used, and different types of the resources have different parameters. For example, resources of a certain type have a same base address, and each resource is offset by a fixed quantity, but within a maximum offset range.

According to an embodiment of the present disclosure, resource IDs are first addresses of the resources, which include a series of regular, non-overlapping and non-interfering address sequences.

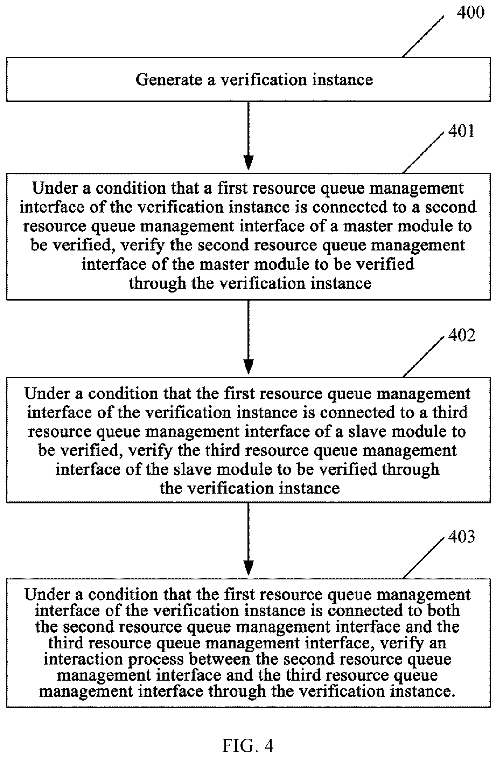

FIG. 4 is a flowchart of a resource queue management interface verification method according to an embodiment of the present disclosure.

Referring to FIG. 4, the resource queue management interface verification method according to an embodiment of the present disclosure includes operations 400 to 403.

At the operation 400, a verification instance is generated.

According to an embodiment of the present disclosure, one verification instance may implement verification on one set of resource queue management interfaces. For example, one verification instance may implement verification on a set of resource queue management interfaces of a master module to be verified, or verification on a set of resource queue management interfaces of a slave module to be verified, or verification on an interaction process between the set of resource queue management interfaces of the master module to be verified and the set of resource queue management interfaces of the slave module to be verified.

Under a condition that the master module to be verified includes two or more sets of resource queue management interfaces, two or more verification instances may be generated to implement verification on the two or more sets of resource queue management interfaces of the master module to be verified without rewriting codes, thereby improving use efficiency of the codes.

Under a condition that the slave module to be verified includes two or more sets of resource queue management interfaces, two or more verification instances may be generated to implement verification on the two or more sets of resource queue management interfaces of the slave module to be verified without rewriting codes, thereby improving use efficiency of the codes.

Under a condition that it needs to verifies an interaction process between the two or more sets of resource queue management interfaces of the master module to be verified and the two or more sets of resource queue management interfaces of the slave module to be verified, two or more verification instances may also be generated to implement verification without rewriting codes, thereby improving use efficiency of the codes.

According to an embodiment of the present disclosure, generation and management processes of resources in a resource pool are extracted from the master module and set as a global sharing process, so that the resources in the resource pool naturally become global sharing resources which may be used in verification instances, and different verification instances share the same resource generation and management processes. Therefore, a resource coverage rate can be improved during the generation and management processes of the resources, while conflicts of the resources are reduced.

At the operation 401, under a condition that a first resource queue management interface of the verification instance is connected to a second resource queue management interface of the master module to be verified, the second resource queue management interface of the master module to be verified is verified through the verification instance.

According to an embodiment of the present disclosure, the resource queue management interface includes four types of operations, namely, resource application, resource release, resource enqueuing, and resource dequeuing, and verification processes of the second resource queue management interface under the four operations are described below, respectively.

According to an embodiment of the present disclosure, before verifying the second resource queue management interface of the master module to be verified, the resources in the resource pool are generated, and a management authority of the resources in the resource pool is handed to the master module to be verified.

For example, generating the resources in the resource pool and handing the management authority of the resources in the resource pool to the master module to be verified may be implemented by: generating a resource ID sequence corresponding to each resource type according to configuration parameters; configuring the configuration parameters into the master module to be verified; configuring a data storage space address parameter of the resource ID sequence to the master module to be verified; writing the resource ID sequence into a data storage space address corresponding to the data storage space address parameter; and clearing the resource ID sequence after the master module to be verified reads the resource ID sequence from the data storage space address.

According to an embodiment of the present disclosure, the configuration parameters include: a resource base address, a quantity of the resources, a resource maximum offset range parameter, and a resource minimum offset address.

According to an embodiment of the present disclosure, in an initial state, i.e., before verification, the resource pool is empty of resource ID sequence. In other words, after the management authority of the resources in the resource pool is handed to the master module to be verified, there is no resource ID available in the resource pool. After the verification is finished, the resource pool is also empty of resource ID sequence, so as to ensure that there is no resource ID available in the resource pool, and all the resources in the resource pool are returned to an interior of the master module to be verified for management.

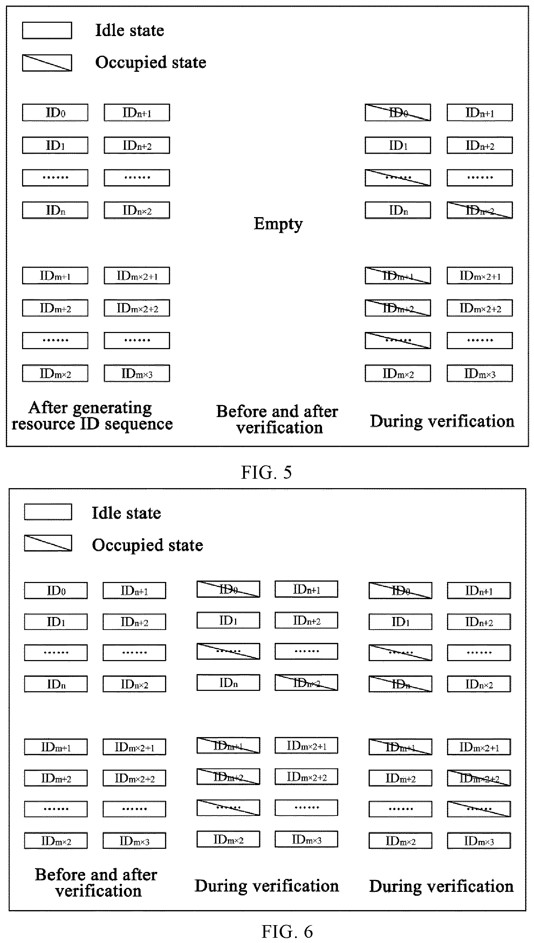

FIG. 5 is a schematic diagram showing state changes of resources in a resource pool in a scenario where a second resource queue management interface corresponding to a master module to be verified is being verified according to an embodiment of the present disclosure. As shown in FIG. 5, after the resource ID sequence is generated, all resource IDs in the generated resource ID sequence are set to an idle state. After the management authority of the resources is handed to the master module to be verified, that is, before the verification, the resource pool is empty of resource ID. During the verification, states of some resource IDs are modified to an occupied state. After verification, the resource pool is empty of resource ID.

### (I) Resource application

According to an embodiment of the present disclosure, the resource application includes two cases of successful resource application and failed resource application. Verification processes for the two cases are described below, respectively.

### (1) Successful resource application

According to an embodiment of the present disclosure, verifying the second resource queue management interface of the master module to be verified through the verification instance includes: sending a request valid signal, first request type information and first request data to the second resource queue management interface through the first resource queue management interface, where the first request type information indicates a request type of the resource application, and the first request data includes a resource type to be applied and a quantity of resources to be applied; under a condition that a response valid signal and first response data sent from the second resource queue management interface are received through the first resource queue management interface, and the first response data indicates the successful resource application, continuously receiving second response data sent from the second resource queue management interface through the first resource queue management interface until a response invalid signal sent from the second resource queue management interface is received, where the second response data includes an applied resource ID; adding the applied resource ID into a resource ID sequence corresponding to the resource type of the applied resource ID, and setting the applied resource ID to an idle state; under a condition that the request valid signal is acquired, acquiring the first request type information and the first request data; under a condition that the first request type information indicates the request type of the resource application, the response valid signal and the first response data are acquired, and the first response data indicates the successful resource application, continuously acquiring the second response data until the response invalid signal is acquired; and determining, according to a quantity of the acquired second response data and the quantity of the resources to be applied, whether a time sequence at the second resource queue management interface is normal.

According to an embodiment of the present disclosure, the request valid signal, the first request type information, and the first request data are sent in parallel, the response valid signal and the first response data are received in parallel, and the response valid signal is received while receiving the second response data. That is, the response valid signal and the second response data are also received in parallel.

In other words, the first response data and the second response data may be obtained only when the response valid signal is received; and under a condition that the response invalid signal is received, the first response data and the second response data cannot be obtained.

According to an embodiment of the present disclosure, determining, according to the quantity of the acquired second response data and the quantity of the resources to be applied, whether the time sequence at the second resource queue management interface is normal includes: under a condition that the quantity of the acquired second response data is the same as the quantity of the resources to be applied, determining that the time sequence at the second resource queue management interface is normal; and under a condition that the quantity of the acquired second response data is not the same as the quantity of the resources to be applied, determining that the time sequence at the second resource queue management interface is abnormal, and outputting first alarm information for indicating an abnormal time sequence at the second resource queue management interface.

### (2) Failed resource application

According to an embodiment of the present disclosure, verifying the second resource queue management interface of the master module to be verified through the verification instance includes: sending the request valid signal, the first request type information and the first request data to the second resource queue management interface through the first resource queue management interface, where the first request type information indicates the request type of the resource application, and the first request data includes the resource type to be applied and the quantity of the resources to be applied; under the condition that the response valid signal and the first response data sent from the second resource queue management interface are received through the first resource queue management interface, and the first response data indicates the failed resource application, determining that a resource application operation is completed; under the condition that the request valid signal is acquired, acquiring the first request type information and the first request data; and under a condition that the first request type information indicates the request type of the resource application, the response valid signal and the first response data are acquired, and the first response data indicates the failed resource application, determining that data acquisition for resource application is completed.

According to an embodiment of the present disclosure, after determining that the resource application operation is completed, the method further includes: checking each applied resource ID to obtain a first check result; under a condition that the first check result indicates that each applied resource ID is normal, further continuing to add the applied resource ID into the resource ID sequence corresponding to the resource type of the applied resource ID; and under a condition that the first check result indicates that at least one applied resource ID is abnormal, outputting second alarm information for indicating that the at least one applied resource ID is abnormal, where the second alarm information may include information used for indicating abnormality of the resource ID, and the abnormal resource ID.

According to an embodiment of the present disclosure, checking each applied resource ID includes: under a condition that a successful check result of checking a resource minimum offset address of the applied resource ID is obtained, the resource type of the applied resource ID is successfully calculated, and the applied resource ID is not present in the resource ID sequence corresponding to the resource type of the applied resource ID, determining that the applied resource ID is normal; and under a condition that a failed check result of checking the resource minimum offset address of the applied resource ID is obtained, or the resource type of the applied resource ID is failed to be calculated, or the applied resource ID is present in the resource ID sequence corresponding to the resource type of the applied resource ID, determining that the applied resource ID is abnormal.

According to an embodiment of the present disclosure, the applied resource ID is a resource ID in the resource pool, and different verification instances share the same resource pool.

### (II) Resource release

According to an embodiment of the present disclosure, verifying the second resource queue management interface of the master module to be verified through the verification instance includes: reading at least one resource ID in the idle state, and deleting the read resource ID from a resource ID sequence corresponding to a resource type of the resource ID, which indicates that the resource ID is released and cannot be used as excitation anymore; sending the request valid signal, second request type information and second request data to the second resource queue management interface through the first resource queue management interface, where the second request type information indicates a request type of the resource release, and the second request data includes a quantity of resources to be released, i.e., a quantity of the read resource IDs; incorporating the read resource ID in third request data, and sending the third request data to the second resource queue management interface through the first resource queue management interface; after all the read resource IDs are sent along with the third request data, converting the request valid signal into a request invalid signal, and sending the request invalid signal to the second resource queue management interface through the first resource queue management interface; under a condition that the response valid signal sent from the second resource queue management interface is received through the first resource queue management interface, determining that a resource release operation is completed; under the condition that the request valid signal is acquired, acquiring the second request type information and the second request data; under a condition that the second request type information indicates the request type of the resource release, continuously acquiring the third request data until the request invalid signal is acquired; and under the condition that the response valid signal is acquired, determining, according to a quantity of the acquired third request data and the quantity of the resources to be released, whether the time sequence at the second resource queue management interface is normal.

According to an embodiment of the present disclosure, the request valid signal, the second request type information, and the second request data are sent in parallel, and the request valid signal is sent while sending the third request data. That is, the request valid signal and the third request data are also sent in parallel.

In other words, sending of the second request type information, the second request data, and the third request data may be obtained by a receiving end only when the request valid signal is sent in parallel with the second request type information, the second request data, and the third request data.

According to an embodiment of the present disclosure, determining, according to the quantity of the acquired third request data and the quantity of the resources to be released, whether the time sequence at the second resource queue management interface is normal includes: under a condition that the quantity of the acquired third request data is the same as the quantity of the resources to be released, determining that the time sequence at the second resource queue management interface is normal; and under a condition that the quantity of the acquired third request data is not the same as the quantity of the resources to be released, determining that the time sequence at the second resource queue management interface is abnormal, and outputting third alarm information for indicating the abnormal time sequence at the second resource queue management interface.

### (III) Resource enqueuing

According to an embodiment of the present disclosure, verifying the second resource queue management interface of the master module to be verified by means of the verification instance includes: reading one resource ID in the idle state, and modifying a state of the read resource ID to the occupied state; sending the request valid signal, third request type information and fourth request data to the second resource queue management interface through the first resource queue management interface, where the third request type information indicates a request type of the resource enqueuing, and the fourth request data includes the read resource ID; incorporating enqueuing characteristic parameters corresponding to the read resource ID in fifth request data, and sending the fifth request data to the second resource queue management interface through the first resource queue management interface; after all the enqueuing characteristic parameters are sent along with the fifth request data, converting the request valid signal into the request invalid signal, and sending the request invalid signal to the second resource queue management interface through the first resource queue management interface; under the condition that the response valid signal sent from the second resource queue management interface is received through the first resource queue management interface, determining that a resource enqueuing operation is completed; under the condition that the request valid signal is acquired, acquiring the third request type information and the fourth request data; under a condition that the third request type information indicates the request type of the resource enqueuing, continuously acquiring the fifth request data until the request invalid signal is acquired; and under the condition that the response valid signal is acquired, determining, according to a quantity of the acquired fifth request data and a quantity of the enqueuing characteristic parameters corresponding to the read resource ID, whether the time sequence at the second resource queue management interface is normal.

According to an embodiment of the present disclosure, the request valid signal, the third request type information, and the fourth request data are sent in parallel, the request valid signal is sent while sending the fifth request data. That is, the fifth request data and the request valid signal are also sent in parallel.

In other words, sending of the third request type information, the fourth request data, and the fifth request data may be obtained by the receiving end only when the request valid signal is sent in parallel with the third request type information, the fourth request data, and the fifth request data.

According to an embodiment of the present disclosure, determining, according to the quantity of the acquired fifth request data and the quantity of the enqueuing characteristic parameters corresponding to the read resource ID, whether the time sequence at the second resource queue management interface is normal includes: under a condition that the quantity of the acquired fifth request data is the same as the quantity of the enqueuing characteristic parameters corresponding to the read resource ID, determining that the time sequence at the second resource queue management interface is normal; and under a condition that the quantity of the acquired fifth request data is not the same as the quantity of the enqueuing characteristic parameters corresponding to the read resource ID, determining that the time sequence at the second resource queue management interface is abnormal, and outputting fourth alarm information for indicating the abnormal time sequence at the second resource queue management interface.

### (IV) Resource dequeuing

According to an embodiment of the present disclosure, verifying the second resource queue management interface of the master module to be verified through the verification instance includes: receiving a queue task indication valid signal or a queue task indication invalid signal of a queue sent from the second resource queue management interface through the first resource queue management interface; sending the request valid signal, fourth request type information and sixth request data to the second resource queue management interface through the first resource queue management interface, where the fourth request type information indicates a request type of the resource dequeuing, and the sixth request data includes a queue number to be dequeued; under a condition that the response valid signal and third response data sent from the second resource queue management interface are received through the first resource queue management interface, the third response data indicates successful dequeuing, and a queue task indication signal corresponding to the queue number to be dequeued is the queue task indication invalid signal, outputting fifth alarm information for indicating the abnormal time sequence at the second resource queue management interface; acquiring the queue task indication valid signal or the queue task indication invalid signal of the queue; under the condition that the request valid signal is acquired, acquiring the fourth request type information and the sixth request data; and under a condition that the response valid signal and the third response data are acquired, and the third response data indicates the successful dequeuing, determining that data acquisition for the resource dequeuing is completed.

According to an embodiment of the present disclosure, the request valid signal, the fourth request type information, and the sixth request data are sent in parallel, and the response valid signal and the third response data are also sent in parallel.

According to an embodiment of the present disclosure, verifying the second resource queue management interface of the master module to be verified through the verification instance further includes: under a condition that the response valid signal and the third response data sent from the second resource queue management interface are received through the first resource queue management interface, the third response data indicates failed dequeuing, and the queue task indication signal corresponding to the queue number to be dequeued is the queue task indication valid signal, receiving fourth response data sent from the second resource queue management interface through the first resource queue management interface; under a condition that the fourth response data includes an error code indicating queue empty, outputting sixth alarm information for indicating the abnormal time sequence at the second resource queue management interface; and under a condition that the response valid signal and the third response data are acquired, and the third response data indicates the failed dequeuing, acquiring the fourth response data.

According to an embodiment of the present disclosure, the response valid signal and the third response data are sent in parallel.

According to an embodiment of the present disclosure, verifying the second resource queue management interface of the master module to be verified through the verification instance further includes: under a condition that the response valid signal and the third response data sent from the second resource queue management interface are received through the first resource queue management interface, the third response data indicates the successful dequeuing, and the queue task indication signal corresponding to the queue number to be dequeued is the queue task indication valid signal, receiving fifth response data sent from the second resource queue management interface through the first resource queue management interface, where the fifth response data includes: a first resource ID in a resource ID sequence corresponding to the queue number to be dequeued; modifying a state of the first resource ID to the idle state; and under a condition that the response valid signal and the third response data are acquired, and the third response data indicates the successful dequeuing, acquiring the fifth response data.

According to an embodiment of the present disclosure, verifying the second resource queue management interface of the master module to be verified through the verification instance further includes: checking the first resource ID to obtain a second check result; under a condition that the second check result indicates that the first resource ID is normal, continuing to modify a state of the first resource ID to the idle state; and under a condition that the second check result indicates that the first resource ID is abnormal, outputting seventh alarm information for indicating that the first resource ID is abnormal.

According to an embodiment of the present disclosure, checking the first resource ID includes: under a condition that a successful check result of checking a resource minimum offset address of the first resource ID is obtained, a resource type of the first resource ID is successfully calculated, the first resource ID is not present in a resource ID sequence corresponding to the resource type of the first resource ID, and the first resource ID is in the idle state, determining that the first resource ID is normal; and under a condition that a failed check result of checking the resource minimum offset address of the first resource ID is obtained, or the resource type of the first resource ID is failed to be calculated, or the first resource ID is present in the resource ID sequence corresponding to the resource type of the first resource ID and the first resource ID is in the occupied state, determining that the first resource ID is abnormal.

According to an embodiment of the present disclosure, verifying the second resource queue management interface of the master module to be verified through the verification instance further includes: under a condition that the response valid signal and the third response data sent from the second resource queue management interface are received through the first resource queue management interface, the third response data indicates the failed dequeuing, and the queue task indication signal corresponding to the queue number to be dequeued is the queue task indication invalid signal, receiving sixth response data sent from the second resource queue management interface, where the sixth response data includes an error code; and under a condition that the response valid signal, the third response data and the queue task indication invalid signal are acquired, and the third response data indicates the failed dequeuing, acquiring the sixth response data.

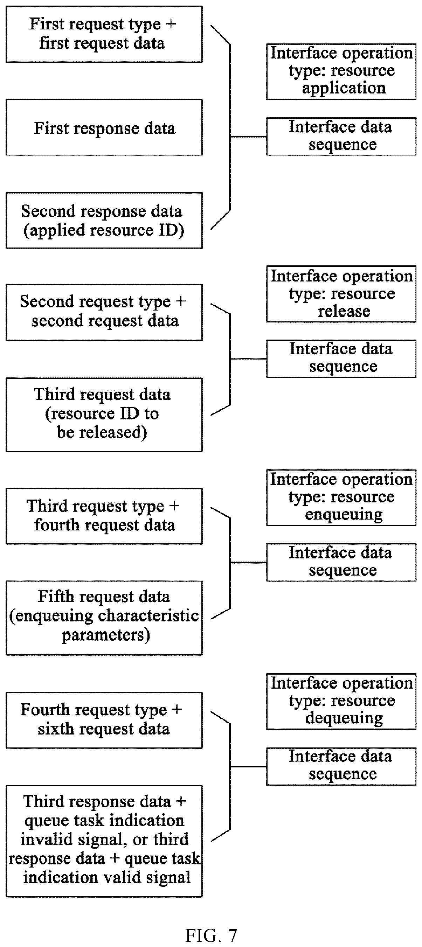

According to an embodiment of the present disclosure, the resource queue management interface verification method according to an embodiment of the present disclosure further includes: packaging the data acquired in the verification processes of the above four operations and sending it to another verification module for another verification. A packaged data structure is as shown in FIG. 7.

At operation 402, under a condition that the first resource queue management interface of the verification instance is connected to a third resource queue management interface of the slave module to be verified, the third resource queue management interface of the slave module to be verified is verified through the verification instance.

According to an embodiment of the present disclosure, the resource queue management interface includes the four types of operations, namely, the resource application, the resource release, the resource enqueuing, and the resource dequeuing, and verification processes of the third resource queue management interface under the four operations are described below, respectively.

According to an embodiment of the present disclosure, before verifying the third resource queue management interface of the slave module to be verified, the resources in the resource pool are generated, and configuration parameters of the generated resources in the resource pool are sent to the slave module to be verified, so that the slave module to be verified may operate normally. For example, the resources in the resource pool may be generated by: generating the resource ID sequence corresponding to each resource type according to the configuration parameters.

According to an embodiment of the present disclosure, the configuration parameters include: the resource base address, the quantity of the resources, the resource maximum offset range parameter, and the resource minimum offset address.

According to an embodiment of the present disclosure, in the initial state, i.e., before verification, the resource pool is not empty of resource ID sequence. In other words, there are resources available in the resource pool, and the resources in the resource pool should be in the idle state. After the verification is finished, the resource pool is also not empty of resource ID sequence, so that a quantity of resource ID sequences in the resource pool is ensured to be the same as a quantity of resource ID sequences in the resource pool in the initial state, and the resource IDs in the resource pool should be an idle state, so as to ensure that there is no abnormal resource in the slave module to be verified, and no resource task remains in the slave module to be verified.

FIG. 6 is a schematic diagram showing state changes of resources in a resource pool in a scenario where a third resource queue management interface corresponding to a slave module to be verified is being verified according to an embodiment of the present application. As shown in FIG. 6, before and after the verification, the resource pool is not empty of resource ID sequence, the quantity of the resource ID sequences remains the same, and the resource IDs remains in the idle state, and during the verification, states of some resource IDs are modified to the occupied state.

### (I) Resource application

According to an embodiment of the present disclosure, the resource application includes two cases of the successful resource application and the failed resource application. Verification processes of the two cases are described below, respectively.

### (1) Successful resource application

According to an embodiment of the present disclosure, verifying the third resource queue management interface of the slave module to be verified through the verification instance includes: under a condition that the request valid signal, the first request type information and the first request data sent from the third resource queue management interface are received through the first resource queue management interface, the first request type information indicates the request type of the resource application, and the first request data includes the resource type to be applied and the quantity of the resources to be applied, searching a resource ID in the idle state from the resource ID sequence corresponding to the resource type to be applied; under a condition that a quantity of the searched resource IDs in the idle state is greater than or equal to the quantity of the resources to be applied, selecting N resource IDs from the searched resource IDs in the idle state, and modifying states of the selected N resource IDs to the occupied state so that the selected N resource IDs cannot be used as excitation any more, where N is the quantity of the resources to be applied; sending the response valid signal and the first response data to the third resource queue management interface through the first resource queue management interface, where the first response data indicates the successful resource application; incorporating the selected N resource IDs in second response data, and sending the second response data to the third resource queue management interface through the first resource queue management interface; after all the selected N resource IDs are sent along with the second response data, converting the response valid signal into the response invalid signal, and sending the response invalid signal to the third resource queue management interface through the first resource queue management interface; under the condition that the request valid signal is acquired, acquiring the first request type information and the first request data; under the condition that the first request type information indicates the request type of the resource application, the response valid signal and the first response data are acquired, and the first response data indicates the successful resource application, continuously acquiring the second response data until the response invalid signal is acquired; and determining, according to the quantity of the acquired second response data and the quantity of the resources to be applied, whether a time sequence at the third resource queue management interface is normal.

According to an embodiment of the present disclosure, the request valid signal, the first request type information, and the first request data are received in parallel, the response valid signal and the first response data are sent in parallel, and the response valid signal is sent while sending the second response data. That is, the second response data and the response valid signal are also sent in parallel.

According to an embodiment of the present disclosure, determining, according to the quantity of the acquired second response data and the quantity of the resources to be applied, whether the time sequence at the third resource queue management interface is normal includes: under the condition that the quantity of the acquired second response data is the same as the quantity of the resources to be applied, determining that the time sequence at the third resource queue management interface is normal; and under the condition that the quantity of the acquired second response data is not the same as the quantity of the resources to be applied, determining that the time sequence at the third resource queue management interface is abnormal, and outputting eighth alarm information for indicating an abnormal time sequence at the third resource queue management interface.

### (2) Failed resource application

According to an embodiment of the present disclosure, verifying the third resource queue management interface of the slave module to be verified through the verification instance includes: under the condition that the request valid signal, the first request type information and the first request data sent from the third resource queue management interface are received through the first resource queue management interface, the first request type information indicates the request type of the resource application, and the first request data includes the resource type to be applied and the quantity of the resources to be applied, searching the resource ID in the idle state from the resource ID sequence corresponding to the resource type to be applied; under a condition that the quantity of the searched resource IDs in the idle state is less than the quantity of the resources to be applied, sending the response valid signal and the first response data to the third resource queue management interface through the first resource queue management interface, where the first response data indicates the failed resource application; under the condition that the request valid signal is acquired, acquiring the first request type information and the first request data; and under the condition that the first request type information indicates the request type of the resource application, the response valid signal and the first response data are acquired, and the first response data indicates the failed resource application, determining that the data acquisition for the resource application is completed.

### (II) Resource release

According to an embodiment of the present disclosure, verifying the third resource queue management interface of the slave module to be verified through the verification instance includes: under a condition that the request valid signal, the second request type information and the second request data sent from the third resource queue management interface are received through the first resource queue management interface, the second request type information indicates the request type of the resource release, and the second request data includes the quantity of the resources to be released, continuously receiving the third request data sent from the third resource queue management interface through the first resource queue management interface until the request invalid signal sent from the third resource queue management interface is received, where the third request data includes: a resource ID to be released; sending the response valid signal to the third resource queue management interface through the first resource queue management interface; modifying a state of the resource ID to be released to the idle state; under the condition that the request valid signal is acquired, acquiring the second request type information and the second request data; under the condition that the second request type information indicates the request type of resource release, continuously acquiring the third request data until the request invalid signal is received; and under the condition that the response valid signal is acquired, determining, according to the quantity of the acquired third request data and the quantity of the resources to be released, whether the time sequence at the third resource queue management interface is normal.

According to an embodiment of the present disclosure, the request valid signal, the second request type information, and the second request data are sent in parallel, and the request valid signal is sent while sending the third request data. That is, the request valid signal and the third request data are also sent in parallel.

In other words, the second request type information, the second request data, and the third request data may be obtained by the receiving end only when the request valid signal is sent in parallel with the second request type information, the second request data, and the third request data.

According to an embodiment of the present disclosure, verifying the third resource queue management interface of the slave module to be verified through the verification instance further includes: checking each resource ID to be released to obtain a third check result; under a condition that the third check result indicates that each resource ID to be released is normal, further continuing to modify a state of each resource ID to be released to the idle state; and under a condition that the third check result indicates that at least one resource ID to be released is abnormal, outputting ninth alarm information for indicating that at least one resource ID to be released is abnormal, where the ninth alarm information may include information used for indicating abnormality of the resource ID, and the abnormal resource ID.

According to an embodiment of the present disclosure, checking each resource ID to be released includes: under a condition that a successful check result of checking a resource minimum offset address of the resource ID to be released is obtained, the resource type of the resource ID to be released is successfully calculated, and the resource ID to be released is not present in the resource ID sequence corresponding to the resource type of the resource ID to be released, determining that the resource ID to be released is normal; and under a condition that a failed check result of checking a resource minimum offset address of the resource ID to be released is obtained, or the resource type of the resource ID to be released is failed to be calculated, or the resource ID to be released is present in the resource ID sequence corresponding to the resource type of the resource ID to be released, determining that the resource ID to be released is abnormal.

According to an embodiment of the present disclosure, determining, according to the quantity of the acquired third request data and the quantity of resources to be released, whether the time sequence at the third resource queue management interface is normal includes: under the condition that the quantity of the acquired third request data is the same as the quantity of the resources to be released, determining that the time sequence at the third resource queue management interface is normal; and under the condition that the quantity of the acquired third request data is not the same as the quantity of the resources to be released, determining that the time sequence at the third resource queue management interface is abnormal, and outputting tenth alarm information for indicating the abnormal time sequence at the third resource queue management interface.

### (III) Resource enqueuing

According to an embodiment of the present disclosure, verifying the third resource queue management interface of the slave module to be verified through the verification instance includes: under a condition that the request valid signal, the third request type information and the fourth request data sent from the third resource queue management interface are received through the first resource queue management interface, the third request type information indicates the request type of the resource enqueuing, and the fourth request data includes a resource ID to be enqueued, continuously receiving the fifth request data sent from the third resource queue management interface through the first resource queue management interface until the request invalid signal is received, where the fifth request data includes: the enqueuing characteristic parameters corresponding to the resource ID to be enqueued; sending the response valid signal to the third resource queue management interface through the first resource queue management interface; modifying a state of the resource ID to be enqueued to the idle state; under the condition that the request valid signal is acquired, acquiring the third request type information and the fourth request data; under the condition that the third request type information indicates the request type of the resource enqueuing, continuously acquiring the fifth request data until the request invalid signal is received; and under the condition that the response valid signal is acquired, determining, according to the quantity of the acquired fifth request data and the quantity of the enqueuing characteristic parameters, whether the time sequence at the third resource queue management interface is normal.

According to an embodiment of the present disclosure, the request valid signal, the third request type information, and the fourth request data are received in parallel, and the request valid signal is received while receiving the fifth request data. That is, the fifth request data and the request valid signal are also received in parallel. In other words, the third request type information, the fourth request data and the fifth request data are acquired only when the request valid signal is received.

According to an embodiment of the present disclosure, verifying the third resource queue management interface of the slave module to be verified through the verification instance further includes: checking the resource ID to be enqueued to obtain a fourth check result; under a condition that the fourth check result indicates that the resource ID to be enqueued is normal, continuing to modify the state of the resource ID to be enqueued to the idle state; and under a condition that the resource ID to be enqueued is abnormal, outputting eleventh alarm information for indicating that the resource ID to be enqueued is abnormal.

According to an embodiment of the present disclosure, checking the resource ID to be enqueued includes: under a condition that a successful check result of checking a resource minimum offset address of the resource ID to be enqueued is obtained, the resource type of the resource ID to enqueued is successfully calculated, the resource ID to be enqueued is not present in the resource ID sequence corresponding to the resource type of the resource ID to be enqueued, and the resource ID to be enqueued is in the occupied state, determining that the resource ID to be enqueued is normal; and under a condition that a failed check result of checking a resource minimum offset address of the resource ID to be enqueued is obtained, or the resource type of the resource ID to be enqueued is failed to be calculated, or the resource ID to be enqueued is present in the resource ID sequence corresponding to the resource type of the resource ID to be enqueued, or the resource ID to be enqueued is in the idle state, determining that the resource ID to be enqueued is abnormal.

According to an embodiment of the present disclosure, determining, according to the quantity of the acquired fifth request data and the quantity of the enqueuing characteristic parameters, whether the time sequence at the third resource queue management interface is normal includes: under the condition that the quantity of the acquired fifth request data is the same as the quantity of the enqueuing characteristic parameters, determining that the time sequence at the third resource queue management interface is normal; and under a condition that the quantity of the acquired fifth request data is not the same as the quantity of the enqueuing characteristic parameters, determining that the time sequence at the third resource queue management interface is abnormal, and outputting twelfth alarm information for indicating the abnormal time sequence at the third resource queue management interface.

### (IV) Resource dequeuing

According to an embodiment of the present disclosure, verifying the third resource queue management interface of the slave module to be verified through the verification instance includes: under a condition that a resource ID sequence corresponding to a queue number of a queue is not empty, sending the queue task indication valid signal of the queue to the third resource queue management interface through the first resource queue management interface; under a condition that the resource ID sequence corresponding to the queue number of the queue is empty, sending the queue task indication invalid signal of the queue to the third resource queue management interface through the first resource queue management interface; under a condition that the request valid signal, the fourth request type information and the sixth request data sent from the third resource queue management interface are received through the first resource queue management interface, the fourth request type information indicates the request type of the resource dequeuing, and the sixth request data includes the queue number to be dequeued, determining whether a resource ID sequence corresponding to the queue number to be dequeued is empty; under a condition that the resource ID sequence corresponding to the queue number to be dequeued is not empty, sending the response valid signal and the third response data to the third resource queue management interface through the first resource queue management interface, where the third response data indicates the successful dequeuing; incorporating a first resource ID in the resource ID sequence corresponding to the queue number to be dequeued in the fifth response data, and sending the fifth response data to the third resource queue management interface through the first resource queue management interface; acquiring the queue task indication valid signal or the queue task indication invalid signal of the queue; under the condition that the request valid signal is acquired, acquiring the fourth request type information and the sixth request data; and under a condition that the response valid signal, the third response valid signal and the queue task indication valid signal are acquired, and the third response valid signal indicates the successful dequeuing, acquiring the fifth response data.

According to an embodiment of the present disclosure, the request valid signal, the fourth request type information, and the sixth request data are received in parallel, the response valid signal and the third response data are sent in parallel, and the fifth response data and the response valid signal are also sent in parallel.

According to an embodiment of the present disclosure, verifying the third resource queue management interface of the slave module to be verified through the verification instance further includes: under the condition that the resource ID sequence corresponding to the queue number to be dequeued is empty, sending the response valid signal and the third response data to the third resource queue management interface through the first resource queue management interface, where the third response data indicates the failed dequeuing; incorporating a random error code in the sixth response data, and sending the sixth response data to the third resource queue management interface through the first resource queue management interface; and under a condition that the response valid signal, the third response valid signal and the queue task indication invalid signal are acquired, and the third response valid signal indicates failed the dequeuing, acquiring the sixth response data.

According to an embodiment of the present disclosure, the response valid signal and the third response data are sent in parallel.

According to an embodiment of the present disclosure, the method further includes: packaging the data acquired in the verification processes of the above four operations and sending it to another verification module for another verification. The packaged data structure is as shown in FIG. 7.

At operation 403, under a condition that the first resource queue management interface of the verification instance is connected to both the second resource queue management interface and the third resource queue management interface, verifying an interaction process between the second resource queue management interface and the third resource queue management interface through the verification instance.

According to an embodiment of the present disclosure, the resource queue management interface includes the four types of operations, namely, the resource application, the resource release, the resource enqueuing, and the resource dequeuing, and verification process of the interaction process between the second resource queue management interface and the third resource queue management interface under the four operations are described below, respectively.

### (I) Resource application

In some exemplary embodiments, verifying the interaction process between the second resource queue management interface and the third resource queue management interface through the verification instance includes: acquiring the request valid signal, the first request type information and the first request data sent from the third resource queue management interface, where the first request type information indicates the request type of resource application, and the first request data includes the resource type to be applied and the quantity of the resources to be applied; acquiring the response valid signal and the first response data sent from the second resource queue management interface; under a condition that the first response data indicates the successful resource application, continuously acquiring the second response data sent from the second resource queue management interface until the response invalid signal sent from the second resource queue management interface is acquired, where the second response data includes: the applied resource ID; and determining, according to the quantity of the acquired second response data and the quantity of the resources to be applied, whether the time sequence at the second resource queue management interface is normal.

According to an embodiment of the present disclosure, determining, according to the quantity of the acquired second response data and the quantity of the resources to be applied, whether the time sequence at the second resource queue management interface is normal includes: under the condition that the quantity of the acquired second response data is the same as the quantity of the resources to be applied, determining that the time sequence at the second resource queue management interface is normal; and under the condition that the quantity of the acquired second response data is not the same as the quantity of the resources to be applied, determining that the time sequence at the second resource queue management interface is abnormal, and outputting the first alarm information for indicating the abnormal time sequence at the second resource queue management interface.

According to an embodiment of the present disclosure, under a condition that no applied resource ID can be acquired, a pre-generated virtual resource ID may be used instead.

### (II) Resource release

According to an embodiment of the present disclosure, verifying the interaction process between the second resource queue management interface and the third resource queue management interface through the verification instance includes: acquiring the request valid signal, the second request type information and the second request data sent from the third resource queue management interface; where the second request type information indicates the request type of the resource release, and the second request data includes the quantity of the resources to be released; continuously acquiring the third request data sent from the third resource queue management interface until the request invalid signal sent from the third resource queue management interface is acquired, where the third request data includes: the resource ID to be released; acquiring the response valid signal sent from the second resource queue management interface; and determining, according to the quantity of the acquired third request data and the quantity of the resources to be released, whether the time sequence at the second resource queue management interface is normal.

According to an embodiment of the present disclosure, under a condition that no resource ID to be released can be acquired, the pre-generated virtual resource ID may be used instead.

According to an embodiment of the present disclosure, determining, according to the quantity of the acquired third request data and the quantity of resources to be released, whether the time sequence at the second resource queue management interface is normal includes: under the condition that the quantity of the acquired third request data is the same as the quantity of the resources to be released, determining that the time sequence at the second resource queue management interface is normal; and under the condition that the quantity of the acquired third request data is not the same as the quantity of the resources to be released, determining that the time sequence at the second resource queue management interface is abnormal, and outputting the third alarm information.

### (III) Resource enqueuing

According to an embodiment of the present disclosure, verifying the interaction process between the second resource queue management interface and the third resource queue management interface through the verification instance includes: acquiring the request valid signal, the third request type information and the fourth request data sent from the third resource queue management interface, where the third request type information indicates the request type of the resource enqueuing, and the fourth request data includes the resource ID to be enqueued, continuously acquiring the fifth request data sent from the third resource queue management interface until the request invalid signal is acquired, where the fifth request data includes: the enqueuing characteristic parameters corresponding to the resource ID to be enqueued; acquiring the response valid signal sent from the second resource queue management interface; and determining, according to the quantity of the acquired fifth request data and the quantity of the enqueuing characteristic parameters corresponding to the resource ID to be enqueued, whether the time sequence at the third resource queue management interface is normal.

According to an embodiment of the present disclosure, under a condition that no resource ID to be enqueued can be acquired, the pre-generated virtual resource ID may be used instead.

According to an embodiment of the present disclosure, determining, according to the quantity of the acquired fifth request data and the quantity of the enqueuing characteristic parameters, whether the time sequence at the third resource queue management interface is normal includes: under the condition that the quantity of the acquired fifth request data is the same as the quantity of the enqueuing characteristic parameters, determining that the time sequence at the third resource queue management interface is normal; and under a condition that the quantity of the acquired fifth request data is not the same as the quantity of the enqueuing characteristic parameters, determining that the time sequence at the third resource queue management interface is abnormal, and outputting the eleventh alarm information for indicating the abnormal time sequence at the third resource queue management interface.

### (IV) Resource dequeuing

According to an embodiment of the present disclosure, verifying the interaction process between the second resource queue management interface and the third resource queue management interface through the verification instance includes: acquiring the queue task indication valid signal or the queue task indication invalid signal of the queue sent from the second resource queue management interface; acquiring the request valid signal, the fourth request type information and the sixth request data sent from the third resource queue management interface, where the fourth request type information indicates the request type of the resource dequeuing, and the sixth request data includes the queue number to be dequeued; and under the condition that the response valid signal and the third response data sent from the second resource queue management interface are acquired, and the third response data indicates the successful dequeuing, determining that the data acquisition for resource dequeuing is completed.

According to an embodiment of the present disclosure, verifying the interaction process between the second resource queue management interface and the third resource queue management interface through the verification instance further includes: under the condition that the response valid signal and the third response data sent from the second resource queue management interface are acquired, and the third response data indicates the failed dequeuing, acquiring the fourth response data.

According to an embodiment of the present disclosure, verifying the interaction process between the second resource queue management interface and the third resource queue management interface through the verification instance further includes: under the condition that the response valid signal and the third response data sent from the second resource queue management interface are acquired, and the third response data indicates the successful dequeuing, acquiring the fifth response data.

According to an embodiment of the present disclosure, verifying the interaction process between the second resource queue management interface and the third resource queue management interface through the verification instance further includes: under the condition that the response valid signal and the third response data sent from the second resource queue management interface are acquired, and the third response data indicates the failed dequeuing, acquiring the sixth response data.

According to an embodiment of the present disclosure, the method further includes: packaging the data acquired in the verification processes of the above four operations and sending it to another verification module for another verification. The packaged data structure is as shown in FIG. 7.

The resource queue management interface verification method according to the embodiment of the present disclosure is implemented by generating the verification instance, since the same verification instance may be used for the verification on the second resource queue management interface of the master module to be verified, the third resource queue management interface of the slave module to be verified, and the interaction process between the second resource queue management interface and the third resource queue management interface, so that no repeated part is contained in the codes and only one set of codes are desired to be maintained, thereby improving the maintenance efficiency of the codes and implementing the verification on the interaction process between the resource queue management interfaces of the master module and the slave module.

The present disclosure further relates to an electronic device, including: at least one processor; and a memory having at least one program stored thereon which, when executed by the at least one processor, causes any resource queue management interface verification method described above to be implemented.

The processor is a device with a data processing capability, including but not limited to a central processing unit (CPU), or the like; and the memory is a device with a data storage capability including but not limited to, a random access memory (RAM, more specifically SDRAM, DDR, etc.), a read only memory (ROM), an electrically erasable programmable read only memory (EEPROM) or a flash.

According to an embodiment of the present disclosure, the processor and the memory are connected to each other via a bus, and further connected to other components of the computing device.

The present disclosure further relates to a storage medium having a computer program stored thereon which, when executed by a processor, causes any resource queue management interface verification method described above to be implemented.

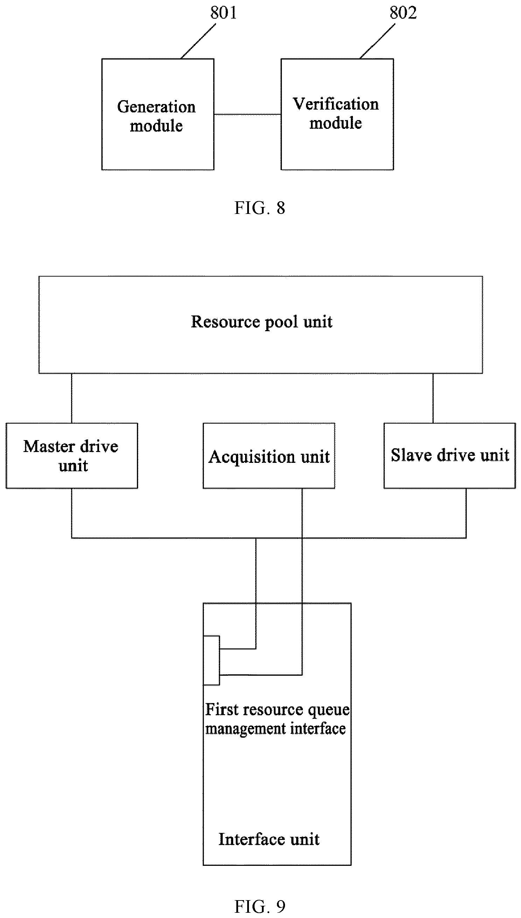

FIG. 8 is a block diagram of a resource queue management interface verification apparatus according to an embodiment of the present disclosure.

Referring to FIG. 8, the resource queue management interface verification apparatus according to an embodiment of the present disclosure includes a generation module 801 and a verification module 802.

The generation module 801 is configured to generating the verification instance.

The verification module 802 is configured to: under the condition that the first resource queue management interface of the verification instance is connected to the second resource queue management interface of the master module to be verified, verify the second resource queue management interface of the master module to be verified through the verification instance; under the condition that the first resource queue management interface of the verification instance is connected to the third resource queue management interface of the slave module to be verified, verify the third resource queue management interface of the slave module to be verified through the verification instance; and under the condition that the first resource queue management interface of the verification instance is connected to both the second resource queue management interface and the third resource queue management interface, verify the interaction process between the second resource queue management interface and the third resource queue management interface through the verification instance.

According to an embodiment of the present disclosure, the verification module 802 is configured to verify the second resource queue management interface of the master module to be verified through the verification instance by: sending the request valid signal, the first request type information and the first request data to the second resource queue management interface through the first resource queue management interface, where the first request type information indicates the request type of the resource application, and the first request data includes the resource type to be applied and the quantity of the resources to be applied; under the condition that the response valid signal and the first response data sent from the second resource queue management interface are received through the first resource queue management interface, and the first response data indicates the successful resource application, continuously receiving the second response data sent from the second resource queue management interface through the first resource queue management interface until the response invalid signal sent from the second resource queue management interface is received, where the second response data includes the applied resource identifier (ID); adding the applied resource ID into the resource ID sequence corresponding to the resource type of the applied resource ID, and setting the applied resource ID to the idle state; under the condition that the request valid signal is acquired, acquiring the first request type information and the first request data; under the condition that the first request type information indicates the request type of the resource application, the response valid signal and the first response data are acquired, and the first response data indicates the successful resource application, continuously acquiring the second response data until the response invalid signal is acquired; and determining, according to the quantity of the acquired second response data and the quantity of the resources to be applied, whether the time sequence at the second resource queue management interface is normal.

According to an embodiment of the present disclosure, the verification module 802 is further configured to: under the condition that the response valid signal and the first response data sent from the second resource queue management interface are received through the first resource queue management interface, and the first response data indicates the failed resource application, determine that the resource application operation is completed; under the condition that the first request type information indicates the request type of the resource application, the response valid signal and the first response data are acquired, and the first response data indicates the failed resource application, determine that the data acquisition for the resource application is completed.

According to an embodiment of the present disclosure, the verification module 802 is configured to determine, according to the quantity of the acquired second response data and the quantity of the resources to be applied, whether the time sequence at the second resource queue management interface is normal by: under the condition that the quantity of the acquired second response data is the same as the quantity of the resources to be applied, determining that the time sequence at the second resource queue management interface is normal; and under the condition that the quantity of the acquired second response data is not the same as the quantity of the resources to be applied, determining that the time sequence at the second resource queue management interface is abnormal, and outputting the first alarm information.

According to an embodiment of the present disclosure, the verification module 802 is further configured to: check each applied resource ID to obtain the first check result; under the condition that the first check result indicates that each applied resource ID is normal, further continue to add the applied resource ID into the resource ID sequence corresponding to the resource type of the applied resource ID; and under the condition that the first check result indicates that the at least one applied resource ID is abnormal, output the second alarm information.

According to an embodiment of the present disclosure, the applied resource ID is the resource ID in the resource pool, and different verification instances share the same resource pool.

According to an embodiment of the present disclosure, the verification module 802 is further configured to: generate the resource ID sequence corresponding to each resource type according to the configuration parameters; configure the configuration parameters into the master module to be verified; configure the data storage space address parameter of the resource ID sequence to the master module to be verified; write the resource ID sequence into the data storage space address corresponding to the data storage space address parameter; and clear the resource ID sequence after the master module to be verified reads the resource ID sequence from the data storage space address.

According to an embodiment of the present disclosure, the verification module 802 is configured to verify the second resource queue management interface of the master module to be verified through the verification instance by: reading the at least one resource ID in the idle state, and deleting the read resource ID from the resource ID sequence corresponding to the resource type of the resource ID, sending the request valid signal, the second request type information and the second request data to the second resource queue management interface through the first resource queue management interface, where the second request type information indicates the request type of the resource release, and the second request data includes the quantity of the resources to be released, i.e., the quantity of the read resource IDs; incorporating the read resource ID in the third request data, and sending the third request data to the second resource queue management interface through the first resource queue management interface; after all the read resource IDs are sent along with the third request data, converting the request valid signal into the request invalid signal, and sending the request invalid signal to the second resource queue management interface through the first resource queue management interface; under the condition that the response valid signal sent from the second resource queue management interface is received through the first resource queue management interface, determining that the resource release operation is completed; under the condition that the request valid signal is acquired, acquiring the second request type information and the second request data; under the condition that the second request type information indicates the request type of the resource release, continuously acquiring the third request data until the request invalid signal is acquired; and under the condition that the response valid signal is acquired, determining, according to the quantity of the acquired third request data and the quantity of the resources to be released, whether the time sequence at the second resource queue management interface is normal.

According to an embodiment of the present disclosure, the verification module 802 is configured to determine, according to the quantity of the acquired third request data and the quantity of the resources to be released, whether the time sequence at the second resource queue management interface is normal by: under the condition that the quantity of the acquired third request data is the same as the quantity of the resources to be released, determining that the time sequence at the second resource queue management interface is normal; and under the condition that the quantity of the acquired third request data is not the same as the quantity of the resources to be released, determining that the time sequence at the second resource queue management interface is abnormal, and outputting the third alarm information.

According to an embodiment of the present disclosure, the verification module 802 is configured to verify the second resource queue management interface of the master module to be verified through the verification instance by: reading one resource ID in the idle state, and modifying the state of the read resource ID to the occupied state; sending the request valid signal, the third request type information and the fourth request data to the second resource queue management interface through the first resource queue management interface, where the third request type information indicates the request type of the resource enqueuing, and the fourth request data includes the read resource ID; incorporating the enqueuing characteristic parameters corresponding to the read resource ID in the fifth request data, and sending the fifth request data to the second resource queue management interface through the first resource queue management interface; after all the enqueuing characteristic parameters are sent along with the fifth request data, converting the request valid signal into the request invalid signal, and sending the request invalid signal to the second resource queue management interface through the first resource queue management interface; under the condition that the response valid signal sent from the second resource queue management interface is received through the first resource queue management interface, determining that the resource enqueuing operation is completed; under the condition that the request valid signal is acquired, acquiring the third request type information and the fourth request data; under the condition that the third request type information indicates the request type of the resource enqueuing, continuously acquiring the fifth request data until the request invalid signal is acquired; and under the condition that the response valid signal is acquired, determining, according to the quantity of the acquired fifth request data and the quantity of the enqueuing characteristic parameters corresponding to the read resource ID, whether the time sequence at the second resource queue management interface is normal.

According to an embodiment of the present disclosure, the verification module 802 is configured to determine, according to the quantity of the acquired fifth request data and the quantity of the enqueuing characteristic parameters corresponding to the read resource ID, whether the time sequence at the second resource queue management interface is normal by: under the condition that the quantity of the acquired fifth request data is the same as the quantity of the enqueuing characteristic parameters corresponding to the read resource ID, determining that the time sequence at the second resource queue management interface is normal; and under the condition that the quantity of the acquired fifth request data is not the same as the quantity of the enqueuing characteristic parameters corresponding to the read resource ID, determining that the time sequence at the second resource queue management interface is abnormal, and outputting the fourth alarm information.

According to an embodiment of the present disclosure, the verification module 802 is configured to verify the second resource queue management interface of the master module to be verified through the verification instance by: receiving the queue task indication valid signal or the queue task indication invalid signal of the queue sent from the second resource queue management interface through the first resource queue management interface; sending the request valid signal, the fourth request type information and the sixth request data to the second resource queue management interface through the first resource queue management interface, where the fourth request type information indicates the request type of the resource dequeuing, and the sixth request data includes the queue number to be dequeued; under the condition that the response valid signal and the third response data are received through the first resource queue management interface, the third response data indicates the successful dequeuing, and the queue task indication signal corresponding to the queue number to be dequeued is the queue task indication invalid signal, outputting the fifth alarm information; acquiring the queue task indication valid signal or the queue task indication invalid signal of the queue; under the condition that the request valid signal is acquired, acquiring the fourth request type information and the sixth request data; and under the condition that the response valid signal and the third response data are acquired, and the third response data indicates the successful dequeuing, determining that the data acquisition for the resource dequeuing is completed.

According to an embodiment of the present disclosure, the verification module 802 is further configured to: under the condition that the response valid signal and third response data are received through the first resource queue management interface, the third response data indicates the failed dequeuing, and the queue task indication signal corresponding to the queue number to be dequeued is the queue task indication valid signal, receive the fourth response data through the first resource queue management interface; under the condition that the fourth response data includes the error code indicating queue empty, output the sixth alarm information; and under the condition that the response valid signal and the third response data are acquired, and the third response data indicates the failed dequeuing, acquire the fourth response data.

According to an embodiment of the present disclosure, the verification module 802 is further configured to: under the condition that the response valid signal and the third response data are received through the first resource queue management interface, the third response data indicates the successful dequeuing, and the queue task indication signal corresponding to the queue number to be dequeued is the queue task indication valid signal, receive the fifth response data through the first resource queue management interface, where the fifth response data includes: the first resource ID in the resource ID sequence corresponding to the queue number to be dequeued; modify the state of the first resource ID to the idle state; and under the condition that the response valid signal and the third response data are acquired, and the third response data indicates the successful dequeuing, acquire the fifth response data.

According to an embodiment of the present disclosure, the verification module 802 is further configured to: check the first resource ID to obtain the second check result; under the condition that the second check result indicates that the first resource ID is normal, continue to modify the state of the first resource ID to the idle state; and under the condition that the second check result indicates that the first resource ID is abnormal, output the seventh alarm information.

According to an embodiment of the present disclosure, the verification module 802 is further configured to: under the condition that the response valid signal and the third response data are received through the first resource queue management interface, the third response data indicates the failed dequeuing, and the queue task indication signal corresponding to the queue number to be dequeued is the queue task indication invalid signal, receive the sixth response data, where the sixth response data includes: the random error code; and under the condition that the response valid signal and the third response data are acquired, and the third response data indicates the failed dequeuing, acquire the sixth response data.

According to an embodiment of the present disclosure, the verification module 802 is configured to verify the third resource queue management interface of the slave module to be verified through the verification instance by: under the condition that the request valid signal, the first request type information and the first request data sent from the third resource queue management interface are received through the first resource queue management interface, the first request type information indicates the request type of the resource application, and the first request data includes the resource type to be applied and the quantity of the resources to be applied, searching the resource ID in the idle state from the resource ID sequence corresponding to the resource type to be applied; under the condition that the quantity of the searched resource IDs in the idle state is greater than or equal to the quantity of the resources to be applied, selecting the N resource IDs from the resource IDs found the the idle state, and modifying the states of the selected N resource IDs to the occupied state, where N is the quantity of the resources to be applied; sending the response valid signal and the first response data to the third resource queue management interface through the first resource queue management interface, where the first response data indicates the successful resource application; incorporating the selected N resource IDs in second response data, and sending the second response data to the third resource queue management interface through the first resource queue management interface; after all the selected N resource IDs are sent along with the second response data, converting the response valid signal into the response invalid signal, and sending the response invalid signal to the third resource queue management interface through the first resource queue management interface; under the condition that the request valid signal is acquired, acquiring the first request type information and the first request data; under the condition that the first request type information indicates the request type of the resource application, the response valid signal and the first response data are acquired, and the first response data indicates the successful resource application, continuously acquiring the second response data until the response invalid signal is acquired; and determining, according to the quantity of the acquired second response data and the quantity of the resources to be applied, whether the time sequence at the third resource queue management interface is normal.

According to an embodiment of the present disclosure, the verification module 802 is further configured to: under the condition that the quantity of the searched resource IDs in the idle state is less than the quantity of the resources to be applied, send the response valid signal and the first response data to the third resource queue management interface through the first resource queue management interface, where the first response data indicates the failed resource application; and under the condition that the first request type information indicates the request type of the resource application, the response valid signal and the first response data are acquired, and the first response data indicates the failed resource application, determine that the data acquisition for the resource application is completed.

According to an embodiment of the present disclosure, the verification module 802 is configured to determine, according to the quantity of the acquired second response data and the quantity of the resources to be applied, whether the time sequence at the third resource queue management interface is normal by: under the condition that the quantity of the acquired second response data is the same as the quantity of the resources to be applied, determining that the time sequence at the third resource queue management interface is normal; and under the condition that the quantity of the acquired second response data is not the same as the quantity of the resources to be applied, determining that the time sequence at the third resource queue management interface is abnormal, and outputting the eighth alarm information.

According to an embodiment of the present disclosure, the verification module 802 is configured to verify the third resource queue management interface of the slave module to be verified through the verification instance by: under the condition that the request valid signal, the second request type information and the second request data sent from the third resource queue management interface are received through the first resource queue management interface, the second request type information indicates the request type of the resource release, and the second request data includes the quantity of the resources to be released, continuously receiving the third request data sent from the third resource queue management interface through the first resource queue management interface until the request invalid signal sent from the third resource queue management interface is received, where the third request data includes: the a resource ID to be released; sending the response valid signal to the third resource queue management interface through the first resource queue management interface; modifying the state of the resource ID to be released to the idle state; under the condition that the request valid signal is acquired, acquiring the second request type information and the second request data; under the condition that the second request type information indicates the request type of the resource release, continuously acquiring the third request data until the request invalid signal is received; and under the condition that the response valid signal is acquired, determining, according to the quantity of the acquired third request data and the quantity of the resources to be released, whether the time sequence at the third resource queue management interface is normal.

According to an embodiment of the present disclosure, the verification module 802 is further configured to: check each resource ID to be released to obtain the third check result; under the condition that the third check result indicates that each resource ID to be released is normal, further continue to modify the state of each resource ID to be released to the idle state; and under the condition that the third check result indicates that at least one resource ID to be released is abnormal, output the ninth alarm information.

According to an embodiment of the present disclosure, the verification module 802 is configured to determine, according to the quantity of the acquired third request data and the quantity of resources to be released, whether the time sequence at the third resource queue management interface is normal by: under the condition that the quantity of the acquired third request data is the same as the quantity of the resources to be released, determining that the time sequence at the third resource queue management interface is normal; and under the condition that the quantity of the acquired third request data is not the same as the quantity of the resources to be released, determining that the time sequence at the third resource queue management interface is abnormal, and outputting the tenth alarm information.

According to an embodiment of the present disclosure, the verification module 802 is configured to verify the third resource queue management interface of the slave module to be verified through the verification instance by: under the condition that the request valid signal, the third request type information and the fourth request data sent from the third resource queue management interface are received through the first resource queue management interface, the third request type information indicates the request type of the resource enqueuing, and the fourth request data includes the resource ID to be enqueued, continuously receiving the fifth request data sent from the third resource queue management interface through the first resource queue management interface until the request invalid signal is received, where the fifth request data includes: the enqueuing characteristic parameters corresponding to the resource ID to be enqueued; sending the response valid signal to the third resource queue management interface through the first resource queue management interface; modifying the state of the resource ID to be enqueued to the idle state; under the condition that the request valid signal is acquired, acquiring the third request type information and the fourth request data; under the condition that the third request type information indicates the request type of the resource enqueuing, continuously acquiring the fifth request data until the request invalid signal is received; and under the condition that the response valid signal is acquired, determining, according to the quantity of the acquired fifth request data and the quantity of the enqueuing characteristic parameters, whether the time sequence at the third resource queue management interface is normal.

According to an embodiment of the present disclosure, the verification module 802 is further configured to: check the resource ID to be enqueued to obtain the fourth check result; under the condition that the fourth check result indicates that the resource ID to be enqueued is normal, continue to modify the state of the resource ID to be enqueued to the idle state; and under the condition that the resource ID to be enqueued is abnormal, output the eleventh alarm information.

According to an embodiment of the present disclosure, the verification module 802 is configured to determine, according to the quantity of the acquired fifth request data and the quantity of the enqueuing characteristic parameters, whether the time sequence at the third resource queue management interface is normal by: under the condition that the quantity of the acquired fifth request data is the same as the quantity of the enqueuing characteristic parameters, determining that the time sequence at the third resource queue management interface is normal; and under the condition that the quantity of the acquired fifth request data is not the same as the quantity of the enqueuing characteristic parameters, determining that the time sequence at the third resource queue management interface is abnormal, and outputting the twelfth alarm information.

According to an embodiment of the present disclosure, the verification module 802 is configured to verify the third resource queue management interface of the slave module to be verified through the verification instance by: under the condition that the resource ID sequence corresponding to the queue number of the queue is not empty, sending the queue task indication valid signal of the queue to the third resource queue management interface through the first resource queue management interface; under the condition that the resource ID sequence corresponding to the queue number of the queue is empty, sending the queue task indication invalid signal of the queue to the third resource queue management interface through the first resource queue management interface; under the condition that the request valid signal, the fourth request type information and the sixth request data sent from the third resource queue management interface are received through the first resource queue management interface, the fourth request type information indicates the request type of the resource dequeuing, and the sixth request data includes the queue number to be dequeued, determining whether the resource ID sequence corresponding to the queue number to be dequeued is empty; under the condition that the resource ID sequence corresponding to the queue number to be dequeued is not empty, sending the response valid signal and the third response data to the third resource queue management interface through the first resource queue management interface, where the third response data indicates the successful dequeuing; incorporating the first resource ID in the resource ID sequence corresponding to the queue number to be dequeued in the fifth response data, and sending the fifth response data to the third resource queue management interface through the first resource queue management interface; acquiring the queue task indication valid signal or the queue task indication invalid signal of the queue; under the condition that the request valid signal is acquired, acquiring the fourth request type information and the sixth request data; and under the condition that the response valid signal and the third response valid signal are acquired, and the third response valid signal indicates the successful dequeuing, acquiring the fifth response data.

According to an embodiment of the present disclosure, the verification module 802 is further configured to: under the condition that the resource ID sequence corresponding to the queue number to be dequeued is empty, send the response valid signal and the third response data to the third resource queue management interface through the first resource queue management interface, where the third response data indicates the failed dequeuing; incorporate the random error code in the sixth response data, and send the sixth response data to the third resource queue management interface through the first resource queue management interface; and under the condition that the response valid signal and the third response valid signal are acquired, and the third response valid signal indicates the failed dequeuing, acquire the sixth response data.

According to an embodiment of the present disclosure, the verification module 802 is configured to verify the interaction process between the second resource queue management interface and the third resource queue management interface through the verification instance by: acquiring the request valid signal, the first request type information and the first request data sent from the third resource queue management interface, where the first request type information indicates the request type of the resource application, and the first request data includes the resource type to be applied and the quantity of the resources to be applied; acquiring the response valid signal and the first response data sent from the second resource queue management interface; under the condition that the first response data indicates the successful resource application, continuously acquiring the second response data sent from the second resource queue management interface until the response invalid signal sent from the second resource queue management interface is acquired, where the second response data includes: the applied resource ID; and determining, according to the quantity of the acquired second response data and the quantity of the resources to be applied, whether the time sequence at the second resource queue management interface is normal.

According to an embodiment of the present disclosure, the verification module 802 is configured to verify the interaction process between the second resource queue management interface and the third resource queue management interface through the verification instance by: acquiring the request valid signal, the second request type information and the second request data sent from the third resource queue management interface, where the second request type information indicates the request type of the resource release, and the second request data includes the quantity of the resources to be released; continuously acquiring the third request data sent from the third resource queue management interface until the request invalid signal sent from the third resource queue management interface is acquired, where the third request data includes: the resource ID to be released; acquiring the response valid signal sent from the second resource queue management interface; and determining, according to the quantity of the acquired third request data and the quantity of the resources to be released, whether the time sequence at the second resource queue management interface is normal.

According to an embodiment of the present disclosure, the verification module 802 is configured to verify the interaction process between the second resource queue management interface and the third resource queue management interface through the verification instance by: acquiring the request valid signal, the third request type information and the fourth request data sent from the third resource queue management interface, where the third request type information indicates the request type of the resource enqueuing, and the fourth request data includes the resource ID to be enqueued, continuously acquiring the fifth request data sent from the third resource queue management interface until the request invalid signal is acquired, where the fifth request data includes: the enqueuing characteristic parameters corresponding to the resource ID to be enqueued; acquiring the response valid signal sent from the second resource queue management interface; and determining, according to the quantity of the acquired fifth request data and the quantity of the enqueuing characteristic parameters corresponding to the resource ID to be enqueued, whether the time sequence at the third resource queue management interface is normal.

According to an embodiment of the present disclosure, the verification module 802 is configured to verify the interaction process between the second resource queue management interface and the third resource queue management interface through the verification instance by: acquiring the queue task indication valid signal or the queue task indication invalid signal of the queue sent from the second resource queue management interface; acquiring the request valid signal, the fourth request type information and the sixth request data sent from the third resource queue management interface, where the fourth request type information indicates the request type of the resource dequeuing, and the sixth request data includes the queue number to be dequeued; and under the condition that the response valid signal and the third response data sent from the second resource queue management interface are acquired, and the third response data indicates the successful dequeuing, determining that the data acquisition for the resource dequeuing is completed.

The specific implementation process of the resource queue management interface verification apparatus according to the embodiments of the present disclosure is the same as the specific implementation process of the resource queue management interface verification method according to the embodiments of the present disclosure, and is not repeated here.

In order to more intuitively embody the implementation process of the resource queue management interface verification apparatus according to the embodiments of the present disclosure, the following describes units involved in implementing verification by the verification instance.

FIG. 9 is a block diagram of a verification instance according to an embodiment of the present disclosure.

As shown in FIG. 9, each verification instance is implemented by a resource pool unit, a master drive unit, an acquisition unit, a slave drive unit, and an interface unit. Different verification instances share the same resource pool unit, but have different master drive units, acquisition units, slave drive units, and interface units.

The interface unit includes a first resource queue management interface.

### (I) Verification on the second resource queue management interface of the master module to be verified

Before performing the verification, the resource pool unit is configured to: generate a resource ID sequence corresponding to each resource type according to the configuration parameters; configure the configuration parameters into the master module to be verified; configure the data storage space address parameter of the resource ID sequence to the master module to be verified; write the resource ID sequence into the data storage space address corresponding to the data storage space address parameter; and clear the resource ID sequence after the master module to be verified reads the resource ID sequence from the data storage space address.

### (1) Resource application

### A. Successful resource application:

The master drive unit is configured to: send the request valid signal, the first request type information and the first request data to the interface unit, where the first request type information indicates the request type of resource application, and the first request data includes the resource type to be applied and the quantity of the resources to be applied; and under the condition that the response valid signal and the first response data sent from the interface unit are received, and the first response data indicates the successful resource application, continuously receive the second response data sent from the interface unit, until the response invalid signal sent from the interface unit is received, where the second response data includes the applied resource ID.

The interface unit is configured to: send the request valid signal, the first request type information and the first request data to the second resource queue management interface through the first resource queue management interface, and send the request valid signal, the first request type information, and the first request data to the master drive unit; under the condition that the response valid signal and the first response data sent from the second resource queue management interface are received through the first resource queue management interface, and the first response data indicates the successful resource application, continuously receive the second response data sent from the second resource queue management interface through the first resource queue management interface until the response invalid signal sent from the second resource queue management interface is received; and send the response valid signal, the first response data and the second response data to the master drive unit.

The resource pool unit is configured to: add the applied resource ID into the resource ID sequence corresponding to the resource type of the applied resource ID, and mark the state of the applied resource ID as the idle state.

The acquisition unit is configured to: under the condition that the request valid signal is acquired, acquire the first request type information and the first request data; under the condition that the first request type information indicates the request type of the resource application, the response valid signal and the first response data are acquired, and the first response data indicates the successful resource application, continuously acquire the second response data until the response invalid signal is acquired; and determine, according to the quantity of the acquired second response data and the quantity of the resources to be applied, whether the time sequence at the second resource queue management interface is normal.

According to an embodiment of the present disclosure, the resource pool unit is further configured to: check each applied resource ID to obtain the first check result; under the condition that the first check result indicates that each applied resource ID is normal, further continue to add the applied resource ID into the resource ID sequence corresponding to the resource type of the applied resource ID; and under the condition that the first check result indicates that at least one applied resource ID is abnormal, send the second alarm information to the master drive unit.

The master drive unit is further configured to: output the second alarm information for indicating that the at least one applied resource ID is abnormal, where the second alarm information may include information used for indicating the abnormality of the resource ID, and the abnormal resource ID.

### B. Failed resource application:

The master drive unit is configured to: send the request valid signal, the first request type information and the first request data to the interface unit, where the first request type information indicates the request type of the resource application, and the first request data includes the resource type to be applied and the quantity of the resources to be applied; and under the condition that the response valid signal and the first response data sent from the interface unit are received, and the first response data indicates the failed resource application, determine that the resource application operation is completed.

The interface unit is configured to: send the request valid signal, the first request type information and the first request data to the second resource queue management interface through the first resource queue management interface, and send the request valid signal, the first request type information, and the first request data to the master drive unit; under the condition that the response valid signal and the first response data sent from the second resource queue management interface are received through the first resource queue management interface, and the first response data indicates the failed resource application, determine that the resource application operation is completed; and send the response valid signal and the first response data to the master drive unit.

The acquisition unit is configured to: under the condition that the request valid signal is acquired, acquire the first request type information and the first request data; and under the condition that the first request type information indicates the request type of the resource application, the response valid signal and the first response data are acquired, and the first response data indicates the failed resource application, determine that the data acquisition for the resource application is completed.

### (2) Resource release

The master drive unit is configured to: read the at least one resource ID in the idle state; and send the request valid signal, the second request type information and the second request data to the interface unit, where the second request type information indicates the request type of the resource release, and the second request data includes the quantity of the resources to be released, i.e., the quantity of the read resource IDs; incorporate the read resource ID in the third request data, and send the third request data to the interface unit; after all the read resource IDs are sent along with the third request data, convert the request valid signal into the request invalid signal, and send the request invalid signal to the interface unit; and under the condition that the response valid signal sent from the interface unit is received, determine that the resource release operation is completed.

The resource pool unit is configured to: delete the read resource ID from the resource ID sequence corresponding to the resource type of the resource ID, which indicates that the resource ID is released and cannot be used as excitation any more.

The interface unit is configured to: send the request valid signal, the second request type information and the second request data to the second resource queue management interface through the first resource queue management interface; incorporate the read resource ID in the third request data, and send each read resource ID to the second resource queue management interface in sequence through the first resource queue management interface; after all read resource IDs are sent, convert the request valid signal into the a request invalid signal, and send the request invalid signal to the second resource queue management interface through the first resource queue management interface; under the condition that the response valid signal sent from the second resource queue management interface is received through the first resource queue management interface, determine that the resource release operation is completed.

The acquisition unit is configured to: under the condition that the request valid signal is acquired, acquire the second request type information and the second request data; under the condition that the second request type information indicates the request type of the resource release, continuously acquire the third request data until the request invalid signal is acquired; and under the condition that the response valid signal is acquired, determine, according to the quantity of the acquired third request data and the quantity of the resources to be released, whether the time sequence at the second resource queue management interface is normal.

### (3) Resource enqueuing

The master drive unit is configured to: read one resource ID in the idle state, and notify the resource pool unit to modify the state of the read resource ID to the occupied state; send the request valid signal, the third request type information and the fourth request data to the interface unit; where the third request type information indicates the request type of the resource enqueuing, and the fourth request data includes the read resource ID; incorporate the enqueuing characteristic parameters corresponding to the read resource ID in the fifth request data, and send the fifth request data to the interface unit; after all the enqueuing characteristic parameters are sent along with the fifth request data, convert the request valid signal into the request invalid signal, and send the request invalid signal to the interface unit; and under the condition that the response valid signal sent from the interface unit is received, determine that the resource enqueuing operation is completed.

The interface unit is configured to: send the request valid signal, the third request type information and the fourth request data to the second resource queue management interface through the first resource queue management interface; incorporate the enqueuing characteristic parameters corresponding to the read resource ID in the fifth request data, and send the fifth request data to the second resource queue management interface through the first resource queue management interface; after all the enqueuing characteristic parameters are sent along with the fifth request data, convert the request valid signal into the request invalid signal, and send the request invalid signal to the second resource queue management interface through the first resource queue management interface; and under the condition that the response valid signal sent from the second resource queue management interface is received through the first resource queue management interface, send the response valid signal to the master drive unit.

The resource pool unit is configured to: modify that state of the read resource ID to the occupied state.

The acquisition unit is configured to: under the condition that the request valid signal is acquired, acquire the third request type information and the fourth request data; under the condition that the third request type information indicates the request type of the resource enqueuing, continuously acquire the fifth request data until the request invalid signal is acquired; and under the condition that the response valid signal is acquired, determine, according to the quantity of the acquired fifth request data and the quantity of the enqueuing characteristic parameters corresponding to the read resource ID, whether the time sequence at the second resource queue management interface is normal.

### (4) Resource dequeuing

According to an embodiment of the present disclosure, the master drive unit is configured to: receive the queue task indication valid signal or the queue task indication invalid signal of the queue sent from the interface unit; send the request valid signal, the fourth request type information and the sixth request data to the interface unit, where the fourth request type information indicates the request type of resource dequeuing, and the sixth request data includes the queue number to be dequeued; under the condition that the response valid signal and the third response data sent from the interface unit are received, the third response data indicates the successful dequeuing, and the queue task indication signal corresponding to the queue number to be dequeued is the queue task indication invalid signal, output the fourth alarm information for indicating the abnormal time sequence at the second resource queue management interface.

The interface unit is configured to: receive the queue task indication valid signal or the queue task indication invalid signal of the queue sent from the second resource queue management interface through the first resource queue management interface; send the request valid signal, the fourth request type information and the sixth request data to the second resource queue management interface through the first resource queue management interface; and under the condition that the response valid signal and the third response data are received through the first resource queue management interface, send the response valid signal, the third response data and the queue task indication invalid signal to the master drive unit.

The acquisition unit is configured to: acquire the queue task indication valid signal or the queue task indication invalid signal of the queue; under the condition that the request valid signal is acquired, acquire the fourth request type information and the sixth request data; and under the condition that the response valid signal and the third response data are acquired, and the third response data indicates the successful dequeuing, determine that the data acquisition for the resource dequeuing is completed.

According to an embodiment of the present disclosure, the interface unit is further configured to: under the condition that the response valid signal and the third response data are received through the first resource queue management interface, and the third response data indicates the failed dequeuing, receive the fourth response data through the first resource queue management interface; and send the response valid signal and the third response data to the master drive unit, and send the fourth response data to the master drive unit.

The master drive unit is further configured to: under the condition that the response valid signal and the third response data sent from the interface unit are received, the third response data indicates the failed dequeuing, and the queue task indication signal corresponding to the queue number to be dequeued is the queue task indication valid signal, receive the fourth response data sent from the interface unit; and under the condition that the fourth response data includes the error code indicating the queue empty, output the fifth alarm information for indicating the abnormal time sequence at the second resource queue management interface.

The acquisition unit is further configured to: under the condition that the response valid signal and the third response data are acquired, and the third response data indicates the failed dequeuing, acquire the fourth response data.

According to an embodiment of the present disclosure, the interface unit is further configured to: under the condition that the response valid signal and the third response data are received through the first resource queue management interface, and the third response data indicates the successful dequeuing, receive the fifth response data through the first resource queue management interface; where the fifth response data includes: the first resource ID in the resource ID sequence corresponding to the queue number to be dequeued; send the response valid signal and the third response data to the master drive unit, and send the fifth response data to the master drive unit.

The master drive unit is further configured to: under the condition that the response valid signal and the third response data sent from the interface unit are received, the third response data indicates the successful dequeuing, and the queue task indication signal corresponding to the queue number to be dequeued is the queue task indication valid signal, receive the fifth response data sent from the interface unit.

The resource pool unit is further configured to: modify the state of the first resource ID to the idle state.

The acquisition unit is further configured to: under the condition that the response valid signal and the third response data are acquired, and the third response data indicates the successful dequeuing, acquire the fifth response data.

According to an embodiment of the present disclosure, the interface unit is further configured to: under the condition that the response valid signal and the third response data are received through the first resource queue management interface, and the third response data indicates the failed dequeuing, receive the sixth response data, where the sixth response data includes: the random error code; send the response valid signal, the third response data and the queue task indication invalid signal to the master drive unit; and send the sixth response data to the master drive unit.

The master drive unit is further configured to: under the condition that the response valid signal the third response data sent from the interface unit are received, the third response data indicates the failed dequeuing, and the queue task indication signal corresponding to the queue number to be dequeued is the queue task indication invalid signal, receive the sixth response data sent from the interface unit.

The acquisition unit is further configured to: under the condition that the response valid signal and the third response data are acquired, and the third response data indicates the failed dequeuing, acquire the sixth response data.

### (II) Verification on the third resource queue management interface of the slave module to be verified

### (1) Resource application

### A. Successful resource application

The interface unit is configured to: receive the request valid signal, the first request type information and the first request data sent from the third resource queue management interface through the first resource queue management interface, where the first request type information indicates the request type of the resource application, and the first request data includes the resource type to be applied and the quantity of the resources to be applied; and send the request valid signal, the first request type information, and the first request data to the slave drive unit.

The slave drive unit is configured to: under the condition that the request valid signal, the first request type information, and the first request data sent from the interface unit are received, search the resource ID in the idle state from the resource ID sequence corresponding to the resource type to be applied; and under the condition that the quantity of the searched resource IDs in the idle state is greater than or equal to the quantity of the resources to be applied, select the N resource IDs from the searched resource IDs in the idle state.

The resource pool unit is configured to: modify the states of the selected N resource IDs to the occupied state so that the selected N resource IDs cannot be used as excitation any more, where N is the quantity of the resources to be applied.

The slave drive unit is further configured to: send the response valid signal and the first response data to the interface unit, where the first response data indicates the successful resource application; incorporate the selected N resource IDs in the second response data, and send the second response data to the interface unit; and after all the selected N resource IDs are sent along with the second response data, convert the response valid signal into the response invalid signal, and send the response invalid signal to the interface unit.

The interface unit is further configured to: send the response valid signal and the first response data to the third resource queue management interface through the first resource queue management interface; incorporate the selected N resource IDs in second response data, and send the second response data to the third resource queue management interface through the first resource queue management interface; and after all the selected N resource IDs are sent along with the second response data, convert the response valid signal into the response invalid signal, and send the response invalid signal to the third resource queue management interface through the first resource queue management interface.

The acquisition unit is configured to: under the condition that the request valid signal is acquired, acquire the first request type information and the first request data; under the condition that the first request type information indicates the request type of the resource application, the response valid signal and the first response data are acquired, and the first response data indicates the successful resource application, continuously acquire the second response data until the response invalid signal is acquired; and determine, according to the quantity of the acquired second response data and the quantity of the resources to be applied, whether the time sequence at the third resource queue management interface is normal.

### B. For failed resource application

The interface unit is configured to: receive the request valid signal, the first request type information and the first request data sent from the third resource queue management interface through the first resource queue management interface, where the first request type information indicates the request type of the resource application, and the first request data includes the resource type to be applied and the quantity of the resources to be applied; and send the request valid signal, the first request type information, and the first request data to the slave drive unit.

The slave drive unit is configured to: under the condition that the request valid signal, the first request type information, and the first request data sent from the interface unit are received, search the resource ID in the idle state from the resource ID sequence corresponding to the resource type to be applied; and under the condition that the quantity of the searched resource IDs in the idle state is less than the quantity of the resources to be applied, send the response valid signal and the first response data to the interface unit, where the first response data indicates the failed resource application.

The interface unit is further configured to: send the response valid signal and the first response data to the third resource queue management interface through the first resource queue management interface.

The acquisition unit is configured to: under the condition that the request valid signal is acquired, acquire the first request type information and the first request data; and under the condition that the first request type information indicates the request type of the resource application, the response valid signal and the first response data are acquired, and the first response data indicates the failed resource application, determine that the data acquisition for the resource application is completed.

### (2) Resource release

The slave drive unit is configured to: under the condition that the request valid signal, the second request type information, and the second request data sent from the interface unit are received, the second request type information indicates the request type of the resource release, and the second request data includes the quantity of the resources to be released, continuously receive the third request data sent from the interface unit, until the request invalid signal sent from the interface unit is received, where the third request data includes: the resource ID to be released; and send the response valid signal to the interface unit.

The interface unit is configured to: under the condition that the request valid signal, the second request type information and the second request data sent from the third resource queue management interface are received through the first resource queue management interface, continuously receive the third request data sent from the third resource queue management interface through the first resource queue management interface until the request invalid signal sent from the third resource queue management interface is received; send the request valid signal, the second request type information, and the second request data to the slave drive unit; send the third request data to the slave drive unit; and send the response valid signal to the third resource queue management interface through the first resource queue management interface.

The resource pool unit is configured to: modify the states of the resource ID to be released to the idle state.

The acquisition unit is configured to: under the condition that the request valid signal is acquired, acquire the second request type information and the second request data; under the condition that the second request type information indicates the request type of the resource release, continuously acquire the third request data until the request invalid signal is received; and under the condition that the response valid signal is acquired, determine, according to the quantity of the acquired third request data and the quantity of the resources to be released, whether the time sequence at the third resource queue management interface is normal.

According to an embodiment of the present disclosure, the resource pool unit is further configured to: check the resource ID to be released to obtain the third check result; under the condition that the third check result indicates that all resource IDs to be released are normal, further modify the state of each resource ID to be released to the idle state; and under the condition that the third check result indicates that at least one resource ID to be released is abnormal, send the eighth alarm information to the slave drive unit.

The slave drive unit is further configured to: output the eighth alarm information for indicating that the at least one resource ID to be released is abnormal, where the eighth alarm information may include the information used for indicating the abnormality of the resource ID, and the abnormal resource ID.

### (3) Resource enqueuing

The interface unit is configured to: under the condition that the request valid signal, the third request type information and the fourth request data sent from the third resource queue management interface are received through the first resource queue management interface, the third request type information indicates the request type of the resource enqueuing, and the fourth request data includes the resource ID to be enqueued, continuously receive the fifth request data sent from the third resource queue management interface through the first resource queue management interface until the request invalid signal is received, where the fifth request data includes: the enqueuing characteristic parameters corresponding to the resource ID to be enqueued; send the request valid signal, the third request type information, and the fourth request data to the slave drive unit; continuously send the fifth request data to the slave drive unit; and send the response valid signal to the third resource queue management interface through the first resource queue management interface.

The slave drive unit is configured to: under the condition that the request valid signal, the third request type information, and the fourth request data sent from the interface unit are received, continuously receive the fifth request data sent from the third resource queue management interface through the first resource queue management interface until the request invalid signal is received; and send the response valid signal to the interface unit.

The resource pool unit is configured to: modify the state of the resource ID to be enqueued to the idle state.

The acquisition unit is configured to: under the condition that the request valid signal is acquired, acquire the third request type information and the fourth request data; under the condition that the third request type information indicates the request type of the resource enqueuing, continuously acquire the fifth request data until the request invalid signal is received; and under the condition that the response valid signal is acquired, determine, according to the quantity of the acquired fifth request data and the quantity of the enqueuing characteristic parameters, whether the time sequence at the third resource queue management interface is normal.

According to an embodiment of the present disclosure, the resource pool unit is further configured to: check the resource ID to be enqueued to obtain the fourth check result; under the condition that the fourth check result indicates that the resource ID to be enqueued is normal, further modify the state of the resource ID to be enqueued to the idle state; and under the condition that the resource ID to be enqueued is abnormal, send the tenth alarm information to the slave drive unit.

The slave drive unit is further configured to: output the tenth alarm information for indicating that the resource ID to be enqueued is abnormal.

### (4) Resource dequeuing

The interface unit is configured to: send the queue task indication valid signal of the queue to the third resource queue management interface through the first resource queue management interface; send the queue task indication invalid signal of the queue to the third resource queue management interface through the first resource queue management interface; receive the request valid signal, the fourth request type information and the sixth request data sent from the third resource queue management interface through the first resource queue management interface, where the fourth request type information indicates the request type of the resource dequeuing, and the sixth request data includes the queue number to be dequeued; send the request valid signal, the fourth request type information, and the sixth request data to the slave drive unit; send the response valid signal and the first response data to the third resource queue management interface through the first resource queue management interface, where the third response data indicates the successful dequeuing; incorporate the first resource ID in the resource ID sequence corresponding to the queue number to be dequeued in the fifth response data, and send the fifth response data to the third resource queue management interface through the first resource queue management interface.

The slave drive unit is configured to: under the condition that the resource ID sequence corresponding to the queue number of the queue is not empty, send the queue task indication valid signal of the queue to the interface unit; under the condition that the resource ID sequence corresponding to the queue number of the queue is empty, send the queue task indication invalid signal of the queue to the interface unit; under the condition that the request valid signal, the fourth request type information, and the sixth request data sent from the interface unit are received, determine whether the resource ID sequence corresponding to the queue number to be dequeued is empty; under the condition that the resource ID sequence corresponding to the queue number to be dequeued is not empty, send the response valid signal and the third response data to the interface unit, and incorporate the first resource ID in the resource ID sequence corresponding to the queue number to be dequeued in the fifth response data, and send the same to the interface unit.

The acquisition unit is configured to: acquire the queue task indication valid signal or the queue task indication invalid signal of the queue; under the condition that the request valid signal is acquired, acquire the fourth request type information and the sixth request data; and under the condition that the response valid signal and the third response valid signal are acquired, and the third response valid signal indicates the successful dequeuing, acquire the fifth response data.

According to an embodiment of the present disclosure, the slave drive unit is further configured to: under the condition that the resource ID sequence corresponding to the queue number to be dequeued is empty, send the response valid signal and the third response data to the interface unit, where the third response data indicates the failed dequeuing; incorporate the random error code in the sixth response data, and send the sixth response data to the interface unit.

The interface unit is further configured to: send the response valid signal and the first response data to the third resource queue management interface through the first resource queue management interface; and incorporate the random error code in the sixth response data, and send the sixth response data to the third resource queue management interface through the first resource queue management interface.

The acquisition unit is further configured to: under the condition that the response valid signal and the third response valid signal are acquired, and the third response valid signal indicates the failed dequeuing, acquire the sixth response data. (III) Verification on the interaction process between second resource queue management interface of master module to be verified and third resource queue management interface of slave module to be verified

### (1) Resource application

The acquisition unit is configured to: acquire the request valid signal, the first request type information and the first request data sent from the third resource queue management interface, where the first request type information indicates the request type of the resource application, and the first request data includes the resource type to be applied and the quantity of the resources to be applied; acquire the response valid signal and the first response data sent from the second resource queue management interface; under the condition that the first response data indicates the successful resource application, continuously acquire the second response data sent from the second resource queue management interface until the response invalid signal sent from the second resource queue management interface is acquired, where the second response data includes: the applied resource ID; and determine, according to the quantity of the acquired second response data and the quantity of the resources to be applied, whether the time sequence at the second resource queue management interface is normal.

### (2) Resource release

The acquisition unit is configured to: acquire the request valid signal, the second request type information and the second request data sent from the third resource queue management interface, where the second request type information indicates the request type of the resource release, and the second request data includes the quantity of resources to be released; continuously acquire the third request data sent from the third resource queue management interface until the request invalid signal sent from the third resource queue management interface is acquired, where the third request data includes: the resource ID to be released; acquire the response valid signal sent from the second resource queue management interface; and determine, according to the quantity of the acquired third request data and the quantity of the resources to be released, whether the time sequence at the second resource queue management interface is normal.

### (3) Resource enqueuing

The acquisition unit is configured to: acquire the request valid signal, the third request type information and the fourth request data sent from the third resource queue management interface, where the third request type information indicates the request type of the resource enqueuing, and the fourth request data includes the resource ID to be enqueued, continuously acquire the fifth request data sent from the third resource queue management interface until the request invalid signal is acquired, where the fifth request data includes: the enqueuing characteristic parameters corresponding to the resource ID to be enqueued; acquire the response valid signal sent from the second resource queue management interface; and determine, according to the quantity of the acquired fifth request data and the quantity of the enqueuing characteristic parameters corresponding to the resource ID to be enqueued, whether the time sequence at the third resource queue management interface is normal.

### (4) Resource dequeuing

The acquisition unit is configured to: acquire the queue task indication valid signal or the queue task indication invalid signal of the queue sent from the second resource queue management interface; acquire the request valid signal, the fourth request type information and the sixth request data sent from the third resource queue management interface, where the fourth request type information indicates the request type of the resource dequeuing, and the sixth request data includes the queue number to be dequeued; and under the condition that the response valid signal and the third response data sent from the second resource queue management interface are acquired, and the third response data indicates the successful dequeuing, determine that the data acquisition for the resource dequeuing is completed.

According to an embodiment of the present disclosure, verifying the interaction process between the second resource queue management interface and the third resource queue management interface through the verification instance further includes: under the condition that the response valid signal and third response data sent from the second resource queue management interface are acquired, and the third response data indicates the failed dequeuing, acquiring the fourth response data.

According to an embodiment of the present disclosure, the acquisition unit is further configured to: under the condition that the response valid signal and the third response data sent from the second resource queue management interface are acquired, and the third response data indicates the successful dequeuing, acquire the fifth response data.

According to an embodiment of the present disclosure, the acquisition unit is further configured to: under the condition that the response valid signal and the third response data sent from the second resource queue management interface are acquired, and the third response data indicates the failed dequeuing, acquire the sixth response data.

According to an embodiment of the present disclosure, the acquisition unit is further configured to: count numbers of times of the resource application, the resource release, the resource enqueuing and the resource dequeuing.

According to an embodiment of the present disclosure, the interface unit is further configured to: performing assertion and coverage rate statistics.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic memories, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed example embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present application as set forth in the appended claims.

It will be appreciated that the above implementations are merely exemplary implementations for the purpose of illustrating the principle of the present disclosure, and the present disclosure is not limited thereto. It will be apparent to one of ordinary skill in the art that various modifications and variations may be made without departing from the spirit or essence of the present disclosure. Such modifications and variations should also be considered as falling into the protection scope of the present disclosure.

## Claims

1. A resource queue management interface verification method, comprising:
generating a verification instance;
under a condition that a first resource queue management interface of the verification instance is connected to a second resource queue management interface of a master module to be verified, verifying the second resource queue management interface of the master module to be verified through the verification instance;
under a condition that the first resource queue management interface of the verification instance is connected to a third resource queue management interface of a slave module to be verified, verifying the third resource queue management interface of the slave module to be verified through the verification instance; and
under a condition that the first resource queue management interface of the verification instance is connected to both the second resource queue management interface and the third resource queue management interface, verifying an interaction process between the second resource queue management interface and the third resource queue management interface through the verification instance.

2. The resource queue management interface verification method according to claim 1, wherein verifying the second resource queue management interface of the master module to be verified through the verification instance comprises:
sending a request valid signal, first request type information and first request data to the second resource queue management interface through the first resource queue management interface, wherein the first request type information indicates a request type of resource application, and the first request data comprises a resource type to be applied and a quantity of resources to be applied;
under a condition that a response valid signal and first response data sent from the second resource queue management interface are received through the first resource queue management interface, and the first response data indicates successful resource application, continuously receiving second response data sent from the second resource queue management interface through the first resource queue management interface until a response invalid signal sent from the second resource queue management interface is received, wherein the second response data comprises an applied resource identifier (ID);
adding the applied resource ID into a resource ID sequence corresponding to a resource type of the applied resource ID, and setting a state of the applied resource ID to an idle state;
under a condition that the request valid signal is acquired, acquiring the first request type information and the first request data;
under a condition that the first request type information indicates the request type of the resource application, the response valid signal and the first response data are acquired, and the first response data indicates the successful resource application, continuously acquiring the second response data until the response invalid signal is acquired; and
determining, according to a quantity of the acquired second response data and the quantity of the resources to be applied, whether a time sequence at the second resource queue management interface is normal.

3. The resource queue management interface verification method according to claim 2, wherein verifying the second resource queue management interface of the master module to be verified through the verification instance further comprises:
under a condition that the response valid signal and the first response data sent from the second resource queue management interface are received through the first resource queue management interface and the first response data indicates failed resource application, determining that a resource application operation is completed; and
under a condition that the first request type information indicates the request type of the resource application, the response valid signal and the first response data are acquired, and the first response data indicates the failed resource application, determining that data acquisition for the resource application is completed.

4. The resource queue management interface verification method according to claim 2, wherein determining, according to the quantity of the acquired second response data and the quantity of the resources to be applied, whether the time sequence at the second resource queue management interface is normal comprises:
under a condition that the quantity of the acquired second response data is the same as the quantity of the resources to be applied, determining that the time sequence at the second resource queue management interface is normal; and
under a condition that the quantity of the acquired second response data is not the same as the quantity of the resources to be applied, determining that the time sequence at the second resource queue management interface is abnormal, and outputting first alarm information for indicating an abnormal time sequence at the second resource queue management interface.

5. The resource queue management interface verification method according to claim 2, wherein after determining that the resource application is completed, the method further comprises:
checking each applied resource ID to obtain a first check result;
under a condition that the first check result indicates that each applied resource ID is normal, further continuing to add the applied resource ID into the resource ID sequence corresponding to the resource type of the applied resource ID; and
under a condition that the first check result indicates that at least one applied resource ID is abnormal, outputting second alarm information for indicating that the at least one resource ID is abnormal.

6. The resource queue management interface verification method according to claim 2, wherein the applied resource ID is a resource ID in a resource pool, and different verification instances share the same resource pool.

7. The resource queue management interface verification method according to any one of claims 2 to 6, wherein before sending the request valid signal, the first request type information and the first request data to the second resource queue management interface through the first resource queue management interface, verifying the second resource queue management interface of the master module to be verified through the verification instance further comprises:
generating a resource ID sequence corresponding to each resource type according to configuration parameters;
configuring the configuration parameters into the master module to be verified;
configuring a data storage space address parameter of the resource ID sequence to the master module to be verified;
writing the resource ID sequence into a data storage space address corresponding to the data storage space address parameter; and
clearing the resource ID sequence after the master module to be verified reads the resource ID sequence from the data storage space address.

8. The resource queue management interface verification method according to claim 1, wherein verifying the second resource queue management interface of the master module to be verified through the verification instance comprises:
reading at least one resource ID in an idle state, and deleting the read resource ID from a resource ID sequence corresponding to a resource type of the resource ID;
sending a request valid signal, second request type information and second request data to the second resource queue management interface through the first resource queue management interface, wherein the second request type information indicates a request type of resource release, and the second request data comprises a quantity of resources to be released, which is a quantity of read resource IDs;
incorporating the read resource ID in third request data, and sending the third request data to the second resource queue management interface through the first resource queue management interface;
after all the read resource IDs are sent along with the third request data, converting the request valid signal into a request invalid signal, and sending the request invalid signal to the second resource queue management interface through the first resource queue management interface;
under a condition that a response valid signal sent from the second resource queue management interface is received through the first resource queue management interface, determining that a resource release operation is completed;
under a condition that the request valid signal is acquired, acquiring the second request type information and the second request data;
under a condition that the second request type information indicates the request type of the resource release, continuously acquiring the third request data until the request invalid signal is acquired; and
under a condition that the response valid signal is acquired, determining, according to a quantity of the acquired third request data and the quantity of the resources to be released, whether a time sequence at the second resource queue management interface is normal.

9. The resource queue management interface verification method according to claim 8, wherein determining, according to the quantity of the acquired third request data and the quantity of the resources to be released, whether the time sequence at the second resource queue management interface is normal comprises:
under a condition that the quantity of the acquired third request data is the same as the quantity of the resources to be released, determining that the time sequence at the second resource queue management interface is normal; and
under a condition that the quantity of the acquired third request data is not the same as the quantity of the resources to be released, determining that the time sequence at the second resource queue management interface is abnormal, and outputting third alarm information for indicating an abnormal time sequence at the second resource queue management interface.

10. The resource queue management interface verification method according to claim 1, wherein verifying the second resource queue management interface of the master module to be verified through the verification instance comprises:
reading one resource ID in an idle state, and modifying a state of the read resource ID to an occupied state;
sending a request valid signal, third request type information and fourth request data to the second resource queue management interface through the first resource queue management interface, wherein the third request type information indicates a request type of resource enqueuing, and the fourth request data comprises the read resource ID;
incorporating enqueuing characteristic parameters corresponding to the read resource ID in fifth request data, and sending the fifth request data to the second resource queue management interface through the first resource queue management interface;
after all the enqueuing characteristic parameters are sent along with the fifth request data, converting the request valid signal into a request invalid signal, and sending the request invalid signal to the second resource queue management interface through the first resource queue management interface;
under a condition that a response valid signal sent from the second resource queue management interface is received through the first resource queue management interface, determining that a resource enqueuing operation is completed;
under a condition that the request valid signal is acquired, acquiring the third request type information and the fourth request data;
under a condition that the third request type information indicates the request type of the resource enqueuing, continuously acquiring the fifth request data until the request invalid signal is acquired; and
under a condition that the response valid signal is acquired, determining, according to a quantity of the acquired fifth request data and the quantity of the enqueuing characteristic parameters corresponding to the read resource ID, whether a time sequence at the second resource queue management interface is normal.

11. The resource queue management interface verification method according to claim 10, wherein determining, according to the quantity of the acquired fifth request data and the quantity of the enqueuing characteristic parameters corresponding to the read resource ID, whether the time sequence at the second resource queue management interface is normal comprises:
under a condition that the quantity of the acquired fifth request data is the same as the quantity of the enqueuing characteristic parameters corresponding to the read resource ID, determining that the time sequence at the second resource queue management interface is normal; and
under a condition that the quantity of the acquired fifth request data is not the same as the quantity of the enqueuing characteristic parameters corresponding to the read resource ID, determining that the time sequence at the second resource queue management interface is abnormal, and outputting fourth alarm information for indicating an abnormal time sequence at the second resource queue management interface.

12. The resource queue management interface verification method according to claim 1, wherein verifying the second resource queue management interface of the master module to be verified through the verification instance comprises:
receiving a queue task indication valid signal or a queue task indication invalid signal of a queue sent from the second resource queue management interface through the first resource queue management interface;
sending a request valid signal, fourth request type information and sixth request data to the second resource queue management interface through the first resource queue management interface, wherein the fourth request type information indicates a request type of resource dequeuing, and the sixth request data comprises a queue number to be dequeued;
under a condition that a response valid signal and third response data sent from the second resource queue management interface are received through the first resource queue management interface, the third response data indicates successful dequeuing, and a queue task indication signal corresponding to the queue number to be dequeued is the queue task indication invalid signal, outputting fifth alarm information for indicating an abnormal time sequence at the second resource queue management interface;
acquiring the queue task indication valid signal or the queue task indication invalid signal of the queue;
under a condition that the request valid signal is acquired, acquiring the fourth request type information and the sixth request data; and
under a condition that the response valid signal and the third response data are acquired, and the third response data indicates the successful dequeuing, determining that data acquisition for the resource dequeuing is completed.

13. The resource queue management interface verification method according to claim 12, wherein verifying the second resource queue management interface of the master module to be verified through the verification instance further comprises:
under a condition that the response valid signal and the third response data sent from the second resource queue management interface are received through the first resource queue management interface, the third response data indicates failed dequeuing, and the queue task indication signal corresponding to the queue number to be dequeued is the queue task indication valid signal, receiving fourth response data sent from the second resource queue management interface through the first resource queue management interface;
under a condition that the fourth response data comprises an error code indicating queue empty, outputting sixth alarm information for indicating the abnormal time sequence at the second resource queue management interface; and
under a condition that the response valid signal and the third response data are acquired, and the third response data indicates the failed dequeuing, acquiring the fourth response data.

14. The resource queue management interface verification method according to claim 12, wherein verifying the second resource queue management interface of the master module to be verified through the verification instance further comprises:
under a condition that the response valid signal and the third response data sent from the second resource queue management interface are received through the first resource queue management interface, the third response data indicates the successful dequeuing, and the queue task indication signal corresponding to the queue number to be dequeued is the queue task indication valid signal, receiving fifth response data sent from the second resource queue management interface through the first resource queue management interface, wherein the fifth response data comprises: a first resource ID in a resource ID sequence corresponding to the queue number to be dequeued;
modifying a state of the first resource ID to an idle state; and
under a condition that the response valid signal and the third response data are acquired, and the third response data indicates the successful dequeuing, acquiring the fifth response data.

15. The resource queue management interface verification method according to claim 14, wherein verifying the second resource queue management interface of the master module to be verified through the verification instance further comprises:
checking the first resource ID to obtain a second check result;
under a condition that the second check result indicates that the first resource ID is normal, further continuing to modify the state of the first resource ID to the idle state; and
under a condition that the second check result indicates that the first resource ID is abnormal, outputting seventh alarm information for indicating that the first resource ID is abnormal.

16. The resource queue management interface verification method according to claim 12, wherein verifying the second resource queue management interface of the master module to be verified through the verification instance further comprises:
under a condition that the response valid signal and the third response data sent from the second resource queue management interface are received through the first resource queue management interface, the third response data indicates failed dequeuing, and the queue task indication signal corresponding to the queue number to be dequeued is the queue task indication invalid signal, receiving sixth response data sent from the second resource queue management interface, wherein the sixth response data comprises an error code; and
under a condition that the response valid signal and the third response data are acquired, and the third response data indicates the failed dequeuing, acquiring the sixth response data.

17. The resource queue management interface verification method according to claim 1, wherein verifying the third resource queue management interface of the slave module to be verified through the verification instance comprises:
under a condition that a request valid signal, first request type information and first request data sent from the third resource queue management interface are received through the first resource queue management interface, the first request type information indicates a request type of resource application, and the first request data comprises a resource type to be applied and a quantity of resources to be applied, searching a resource ID in an idle state from a resource ID sequence corresponding to the resource type to be applied;
under a condition that a quantity of the searched resource IDs in the idle state is greater than or equal to the quantity of the resources to be applied, selecting N resource IDs from the searched resource IDs in the idle state, and modifying states of the selected N resource IDs to an occupied state, wherein N is the quantity of the resources to be applied;
sending a response valid signal and first response data to the third resource queue management interface through the first resource queue management interface, wherein the first response data indicates successful resource application;
incorporating the selected N resource IDs in second response data, and sending the second response data to the third resource queue management interface through the first resource queue management interface;
after all the selected N resource IDs are sent along with the second response data, converting the response valid signal into a response invalid signal, and sending the response invalid signal to the third resource queue management interface through the first resource queue management interface;
under a condition that the request valid signal is acquired, acquiring the first request type information and the first request data;
under a condition that the first request type information indicates the request type of the resource application, the response valid signal and the first response data are acquired, and the first response data indicates the successful resource application, continuously acquiring the second response data until the response invalid signal is acquired; and
determining, according to a quantity of the acquired second response data and the quantity of the resources to be applied, whether a time sequence at the third resource queue management interface is normal.

18. The resource queue management interface verification method according to claim 17, wherein verifying the third resource queue management interface of the slave module to be verified through the verification instance further comprises:
under a condition that the quantity of the searched resource IDs in the idle state is less than the quantity of the resources to be applied, sending the response valid signal and the first response data to the third resource queue management interface through the first resource queue management interface, wherein the first response data indicates failed resource application;
under a condition that the first request type information indicates the request type of the resource application, the response valid signal and the first response data are acquired, and the first response data indicates the failed resource application, determining that data acquisition for the resource application is completed.

19. The resource queue management interface verification method according to claim 17, wherein determining, according to the quantity of the acquired second response data and the quantity of the resources to be applied, whether the time sequence at the third resource queue management interface is normal comprises:
under a condition that the quantity of the acquired second response data is the same as the quantity of the resources to be applied, determining that the time sequence at the third resource queue management interface is normal; and
under a condition that the quantity of the acquired second response data is not the same as the quantity of the resources to be applied, determining that the time sequence at the third resource queue management interface is abnormal, and outputting eighth alarm information for indicating an abnormal time sequence at the third resource queue management interface.

20. The resource queue management interface verification method according to claim 1, wherein verifying the third resource queue management interface of the slave module to be verified through the verification instance comprises:
under a condition that a request valid signal, second request type information and second request data sent from the third resource queue management interface are received through the first resource queue management interface, the second request type information indicates a request type of resource release, and the second request data comprises a quantity of resources to be released, continuously receiving third request data sent from the third resource queue management interface through the first resource queue management interface until a request invalid signal sent from the third resource queue management interface is received, wherein the third request data comprises a resource ID to be released;
sending a response valid signal to the third resource queue management interface through the first resource queue management interface;
modifying a state of the resource ID to be released to an idle state;
under a condition that the request valid signal is acquired, acquiring the second request type information and the second request data;
under a condition that the second request type information indicates the request type of the resource release, continuously acquiring the third request data until the request invalid signal is received; and
under a condition that the response valid signal is acquired, determining, according to a quantity of the acquired third request data and the quantity of the resources to be released, whether a time sequence at the third resource queue management interface is normal.

21. The resource queue management interface verification method according to claim 20, wherein verifying the third resource queue management interface of the slave module to be verified through the verification instance further comprises:
checking each resource ID to be released to obtain a third check result;
under a condition that the third check result indicates that each resource ID to be released is normal, further continuing to modify a state of each resource ID to be released to an idle state; and
under a condition that the third check result indicates that at least one resource ID to be released is abnormal, outputting ninth alarm information for indicating that the at least one resource ID to be released is abnormal and indicating the abnormal resource ID.

22. The resource queue management interface verification method according to claim 20, wherein determining, according to the quantity of the acquired third request data and the quantity of the resources to be released, whether the time sequence at the third resource queue management interface is normal comprises:
under a condition that the quantity of the acquired third request data is the same as the quantity of the resources to be released, determining that the time sequence at the third resource queue management interface is normal; and
under a condition that the quantity of the acquired third request data is not the same as the quantity of the resources to be released, determining that the time sequence at the third resource queue management interface is abnormal, and outputting tenth alarm information for indicating an abnormal time sequence at the third resource queue management interface.

23. The resource queue management interface verification method according to claim 1, wherein verifying the third resource queue management interface of the slave module to be verified through the verification instance comprises:
under a condition that a request valid signal, third request type information and fourth request data sent from the third resource queue management interface are received through the first resource queue management interface, the third request type information indicates a request type of resource enqueuing, and the fourth request data comprises a resource ID to be enqueued, continuously receiving fifth request data sent from the third resource queue management interface through the first resource queue management interface until a request invalid signal is received, wherein the fifth request data comprises enqueuing characteristic parameters corresponding to the resource ID to be enqueued;
sending a response valid signal to the third resource queue management interface through the first resource queue management interface;
modifying a state of the resource ID to be enqueued to an idle state;
under a condition that the request valid signal is acquired, acquiring the third request type information and the fourth request data;
under a condition that the third request type information indicates the request type of the resource enqueuing, continuously acquiring the fifth request data until the request invalid signal is received, and
under a condition that the response valid signal is acquired, determining, according to a quantity of the acquired fifth request data and the quantity of the enqueuing characteristic parameters, whether a time sequence at the third resource queue management interface is normal.

24. The resource queue management interface verification method according to claim 23, wherein verifying the third resource queue management interface of the slave module to be verified through the verification instance further comprises:
checking the resource ID to be enqueued to obtain a fourth check result;
under a condition that the fourth check result indicates that the resource ID to be enqueued is normal, further continuing to modify the state of the resource ID to be enqueued to the idle state; and
under a condition that the resource ID to be enqueued is abnormal, outputting eleventh alarm information for indicating that the resource ID to be enqueued is abnormal.

25. The resource queue management interface verification method according to claim 23, wherein determining, according to the quantity of the acquired fifth request data and the quantity of the enqueuing characteristic parameters, whether the time sequence at the third resource queue management interface is normal comprises:
under a condition that the quantity of the acquired fifth request data is the same as the quantity of the enqueuing characteristic parameters, determining that the time sequence at the third resource queue management interface is normal; and
under a condition that the quantity of the acquired fifth request data is not the same as the quantity of the enqueuing characteristic parameters, determining that the time sequence at the third resource queue management interface is abnormal, and outputting twelfth alarm information for indicating an abnormal time sequence at the third resource queue management interface.

26. The resource queue management interface verification method according to claim 1, wherein verifying the third resource queue management interface of the slave module to be verified through the verification instance comprises:
under a condition that a resource ID sequence corresponding to a queue number of a queue corresponds is not empty, sending a queue task indication valid signal of the queue to the third resource queue management interface through the first resource queue management interface;
under a condition that the resource ID sequence corresponding to the queue number of the queue is empty, sending a queue task indication invalid signal of the queue to the third resource queue management interface through the first resource queue management interface;
under a condition that a request valid signal, fourth request type information and sixth request data sent from the third resource queue management interface are received through the first resource queue management interface, the fourth request type information indicates a request type of resource dequeuing, and the sixth request data comprises a queue number to be dequeued, determining whether a resource ID sequence corresponding to the queue number to be dequeued is empty;
under a condition that the resource ID sequence corresponding to the queue number to be dequeued is not empty, sending a response valid signal and third response data to the third resource queue management interface through the first resource queue management interface, wherein the third response data indicates successful dequeuing;
incorporating a first resource ID in the resource ID sequence corresponding to the queue number to be dequeued in fifth response data, and sending the fifth response data to the third resource queue management interface through the first resource queue management interface;
acquiring the queue task indication valid signal or the queue task indication invalid signal of the queue;
under a condition that the request valid signal is acquired, acquiring the fourth request type information and the sixth request data; and
under a condition that the response valid signal, the third response valid signal and the queue task indication valid signal are acquired, and the third response valid signal indicates the successful dequeuing, acquiring the fifth response data.

27. The resource queue management interface verification method according to claim 26, wherein verifying the third resource queue management interface of the slave module to be verified through the verification instance further comprises:
under a condition that the resource ID sequence corresponding to the queue number to be dequeued is empty, sending the response valid signal and the third response data to the third resource queue management interface through the first resource queue management interface, wherein the third response data indicates failed dequeuing;
incorporating a random error code in sixth response data, and sending the sixth response data to the third resource queue management interface through the first resource queue management interface; and
under a condition that the response valid signal, the third response valid signal and the queue task indication invalid signal are acquired, and the third response valid signal indicates the failed dequeuing, acquiring the sixth response data.

28. The resource queue management interface verification method according to claim 1, wherein verifying the interaction process between the second resource queue management interface and the third resource queue management interface through the verification instance comprises:
acquiring a request valid signal, first request type information and first request data sent from the third resource queue management interface, wherein the first request type information indicates a request type of resource application, and the first request data comprises a resource type to be applied and a quantity of resources to be applied;
acquiring a response valid signal and first response data sent from the second resource queue management interface;
under a condition that the first response data indicates successful resource application, continuously acquiring second response data sent from the second resource queue management interface until a response invalid signal sent from the second resource queue management interface is acquired, wherein the second response data comprises an applied resource ID; and
determining, according to a quantity of the acquired second response data and the quantity of the resources to be applied, whether a time sequence at the second resource queue management interface is normal.

29. The resource queue management interface verification method according to claim 1, wherein verifying the interaction process between the second resource queue management interface and the third resource queue management interface through the verification instance comprises:
acquiring a request valid signal, second request type information and second request data sent from the third resource queue management interface, wherein the second request type information indicates a request type of resource release, and the second request data comprises a quantity of resources to be released;
continuously acquiring third request data sent from the third resource queue management interface until a request invalid signal sent from the third resource queue management interface is acquired, wherein the third request data comprises a resource ID to be released;
acquiring a response valid signal sent from the second resource queue management interface; and
determining, according to a quantity of the acquired third request data and the quantity of the resources to be released, whether a time sequence at the second resource queue management interface is normal.

30. The resource queue management interface verification method according to claim 1, wherein verifying the interaction process between the second resource queue management interface and the third resource queue management interface through the verification instance comprises:
acquiring a request valid signal, third request type information and fourth request data sent from the third resource queue management interface, wherein the third request type information indicates a request type of resource enqueuing, and the fourth request data comprises a resource ID to be enqueued,
continuously acquiring fifth request data sent from the third resource queue management interface until a request invalid signal is acquired, wherein the fifth request data comprises enqueuing characteristic parameters corresponding to the resource ID to be enqueued;
acquiring a response valid signal sent from the second resource queue management interface; and
determining, according to a quantity of the acquired fifth request data and the quantity of the enqueuing characteristic parameters corresponding to the resource ID to be enqueued, whether a time sequence at the third resource queue management interface is normal.

31. The resource queue management interface verification method according to claim 1, wherein verifying the interaction process between the second resource queue management interface and the third resource queue management interface through the verification instance comprises:
acquiring a queue task indication valid signal or a queue task indication invalid signal of a queue sent from the second resource queue management interface;
acquiring a request valid signal, fourth request type information and sixth request data sent from the third resource queue management interface, wherein the fourth request type information indicates a request type of resource dequeuing, and the sixth request data comprises a queue number to be dequeued; and
under a condition that a response valid signal and third response data sent from the second resource queue management interface are acquired, and the third response data indicates successful dequeuing, determining that data acquisition for resource dequeuing is completed.

32. An electronic device, comprising:
at least one processor; and
a memory having at least one program stored thereon which, when executed by the at least one processor, causes the resource queue management interface verification method according to any one of claims 1 to 31 to be implemented.

33. A storage medium having a computer program stored thereon which, when executed by a processor, causes the resource queue management interface verification method according to any one of claims 1 to 31 to be implemented.
